# EUROPEAN PATENT APPLICATION

(11) **EP 4 614 902 A1**
(43) Date of publication of application: **10.09.2025**
(21) Application number: 22964080.0
(22) Date of filing: 04.11.2022
(51) Int. Cl.: H04L 27/00

(54) **POSITION ESTIMATION METHOD, INFORMATION SENDING METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: LIU, Zhe, Dongguan, Guangdong 523860 (CN); HUANG, Yingpei, Dongguan, Guangdong 523860 (CN); LIU, Wendong, Dongguan, Guangdong 523860 (CN)
(74) Representative: Mewburn Ellis LLP
(86) International application number: PCT/CN2022/130046
(87) International publication number: WO 2024/092776

(57) **Abstract**

A location estimation method, an information transmission method, a terminal device, and a network device are provided. The location estimation method includes the following. First information sent by a network device is received, where the first information is used for determining a target prediction model. A location of a terminal device or information for determining the location of the terminal device is estimated based on the target prediction model, to obtain an estimation result. Instead of using a traditional algorithm to estimate the location of the terminal device, by adopting the location estimation method, it is possible to not only reduce estimation cost of location estimation, but also facilitate improving accuracy of location estimation.

## Description

### TECHNICAL FIELD

Embodiments of the disclosure relate to the field of communication, and more particularly, to a location estimation method, an information transmission method, a terminal device, and a network device.

### BACKGROUND

When positioning a terminal device, a location of the terminal device can be estimated by the terminal device based on a measurement result, or the location of the terminal device can be estimated by a location management function (LMF) after the terminal device reports the measurement result to the LMF, or the location of the terminal device can be calculated by the LMF after a base station performs measurement and reports the measurement result to the LMF. However, the terminal device or the LMF usually estimates the location of the terminal device by means of a traditional algorithm, for example, estimates the location of the terminal device by means of Chan's algorithm or Taylor expansion. However, an excessive amount of calculation is required for the traditional algorithm, which results in excessive cost for location estimation. In addition, if the traditional algorithm is adopted, it is hard to ensure accuracy of location estimation.

### SUMMARY

Embodiments of the disclosure provide a location estimation method, an information transmission method, a terminal device, and a network device, which can not only reduce estimation cost of location estimation, but also facilitate improving accuracy of location estimation.

In a first aspect, a location estimation method is provided in embodiments of the disclosure. The method includes the following. First information sent by a network device is received, where the first information is used for determining a target prediction model. A location of a terminal device or information for determining the location of the terminal device is estimated based on the target prediction model, to obtain an estimation result.

In a second aspect, an information transmission method is provided in embodiments of the disclosure. The method includes the following. First information is sent to a terminal device, where the first information is used for the terminal device to determine a target prediction model, and the target prediction model is used for the terminal device to estimate a location of the terminal device or information for determining the location of the terminal device.

In a third aspect, a terminal device is provided in embodiments of the disclosure. The terminal device is configured to perform the method described above in the first aspect or various implementations of the first aspect. Specifically, the terminal device includes functional modules for performing the method described above in the first aspect or various implementations of the first aspect.

In an implementation, the terminal device can include a processing unit. The processing unit is configured to perform functions related to information processing. For example, the processing unit can be a processor.

In an implementation, the terminal device can include a transmitting unit and/or a receiving unit, where the transmitting unit is configured to perform functions related to transmission, and the receiving unit is configured to perform functions related to reception. For example, the transmitting unit can be a transmitter, and the receiving unit can be a receiver. For another example, the terminal device is a communication chip, the transmitting unit can be an input circuit or an interface of the communication chip, and the transmitting unit can be an output circuit or an interface of the communication chip.

In a fourth aspect, a network device is provided in embodiments of the disclosure. The network device is configured to perform the method described above in the second aspect or various implementations of the second aspect. Specifically, the network device includes functional modules for performing the method described above in the second aspect or various implementations of the second aspect.

In an implementation, the network device can include a processing unit. The processing unit is configured to perform functions related to information processing. For example, the processing unit can be a processor.

In an implementation, the network device can include a transmitting unit and/or a receiving unit, where the transmitting unit is configured to perform functions related to transmission, and the receiving unit is configured to perform functions related to reception. For example, the transmitting unit can be a transmitter, and the receiving unit can be a receiver. For another example, the network device is a communication chip, the receiving unit can be an input circuit or an interface of the communication chip, and the transmitting unit can be an output circuit or an interface of the communication chip.

In a fifth aspect, a terminal device is provided in embodiments of the disclosure. The terminal device includes a transceiver, a processor, and a memory. The memory is configured to store computer programs, and the processor is configured to invoke and execute the computer programs stored in the memory, to cause the transceiver and/or the processor to perform the method described above in the first aspect or various implementations of the first aspect.

In an implementation, the processor is one or more processors and the memory is one or more memories.

In an implementation, the memory can be integrated together with the processor, or the memory is disposed separately from the processor.

In an implementation, the transceiver includes a transmitter and a receiver.

In a sixth aspect, a network device is provided in embodiments of the disclosure. The network device includes a transceiver, a processor, and a memory. The memory is configured to store computer programs, and the processor is configured to invoke and execute the computer programs stored in the memory, to cause the transceiver and/or the processor to perform the method described above in the second aspect or various implementations of the second aspect.

In an implementation, the processor is one or more processors and the memory is one or more memories.

In an implementation, the memory can be integrated together with the processor, or the memory is disposed separately from the processor.

In an implementation, the transceiver includes a transmitter and a receiver.

In a seventh aspect, a chip is provided in embodiments of the disclosure. The chip is configured to implement the method described above in any one of the first aspect or the second aspect or various implementations of the first aspect or the second aspect. Specifically, the chip includes a processor. The processor is configured to invoke and execute computer programs from a memory, to cause a device equipped with the chip to perform the method described above in any one of the first aspect or the second aspect or various implementations of the first aspect or the second aspect.

In an eighth aspect, a computer-readable storage medium is provided in embodiments of the disclosure. The computer-readable storage medium is configured to store computer programs which are operable with a computer to perform the method described above in any one of the first aspect or the second aspect or various implementations of the first aspect or the second aspect.

In a ninth aspect, a computer program product is provided in embodiments of the disclosure. The computer program product includes computer program instructions which are operable with a computer to perform the method described above in any one of the first aspect or the second aspect or various implementations of the first aspect or the second aspect.

In a tenth aspect, a computer program is provided in embodiments of the disclosure. The computer program, when executed by a computer, is operable with the computer to perform the method described above in any one of the first aspect or the second aspect or various implementations of the first aspect or the second aspect.

With regard to the location estimation method provided in embodiments of the disclosure, instead of using a traditional algorithm to estimate the location of the terminal device, the terminal device estimates, based on the target prediction model, the location of the terminal device or the information for determining the location of the terminal device, so as to obtain the estimation result. As such, it is possible to not only reduce estimation cost of location estimation, but also facilitate improving accuracy of location estimation.

### BRIEF DESCRIPTION OF THE DRAWINGS

FIG. 1 and FIG. 2 each illustrate an example of a system framework provided in embodiments of the disclosure.
FIG. 3 is a schematic diagram of a neuron structure provided in embodiments of the disclosure.
FIG. 4 is an example of a structure of a neural network (NN) provided in embodiments of the disclosure.
FIG. 5 is a schematic diagram of a convolutional neural network (CNN) provided in embodiments of the disclosure.
FIG. 6 is a schematic diagram of a long short-term memory (LSTM) unit provided in embodiments of the disclosure.
FIG. 7 is a schematic flowchart of a method for terminal-assisted positioning provided in embodiments of the disclosure.
FIG. 8 is a schematic flowchart of a method for uplink (UL)-based positioning provided in embodiments of the disclosure.
FIG. 9 is a schematic flowchart of a location estimation method provided in embodiments of the disclosure.
FIG. 10 is a schematic diagram illustrating inputs and outputs of a target prediction model when the target prediction model is applied to direct positioning provided in embodiments of the disclosure.
FIG. 11 is a schematic diagram illustrating inputs and outputs of a target prediction model when the target prediction model is applied to assisted positioning provided in embodiments of the disclosure.
FIG. 12 is a schematic flowchart of a direct-positioning-based location estimation method provided in embodiments of the disclosure.
FIG. 13 is a schematic flowchart of an assisted-positioning-based location estimation method provided in embodiments of the disclosure.
FIG. 14 is another schematic flowchart of a location estimation method provided in embodiments of the disclosure.
FIG. 15 is another schematic flowchart of a direct-positioning-based location estimation method provided in embodiments of the disclosure.
FIG. 16 is another schematic flowchart of an assisted-positioning-based location estimation method provided in embodiments of the disclosure.
FIG. 17 is a schematic block diagram of a terminal device provided in embodiments of the disclosure.
FIG. 18 is a schematic block diagram of a network device provided in embodiments of the disclosure.
FIG. 19 is a schematic block diagram of a communication device provided in embodiments of the disclosure.
FIG. 20 is a schematic block diagram of a chip provided in embodiments of the disclosure.

### DETAILED DESCRIPTION

The following will describe technical solutions of embodiments of the disclosure with reference to the accompanying drawings.

It should be noted that, the term "pre-defined" or "pre-set" involved in embodiments of the disclosure can be implemented by pre-storing a corresponding code or table in a device (for example, including the terminal device and the network device) or in other manners that can be used for indicating related information, and the disclosure is not limited in this regard. For example, the "pre-defined" can mean defined in a protocol. Optionally, the "protocol" can refer to a communication standard protocol, which can include, for example, an long-term evolution (LTE) protocol, a new radio (NR) protocol, and a protocol applied to a future communication system, and the disclosure is not limited in this regard.

In addition, the term "indication" referred to in embodiments of the disclosure can be a direct indication, can be an indirect indication, or can mean that there is an association. For example, *A* indicates *B* can mean that *A* directly indicates *B*, for instance, *B* can be obtained according to *A*; can mean that *A* indirectly indicates *B,* for instance, *A* indicates *C*, and *B* can be obtained according to *C*; or can mean that that there is an association between *A* and *B*. The term "corresponding to" can mean that there is a direct or indirect correspondence between the two, can mean that there is an association between the two, or can mean a relationship of indicating and indicated or configuring and configured, etc. In addition, the elaboration "when..." involved in embodiments of the disclosure can be interpreted as "if" or "on condition that" or "at the time when..." or "in response to". Similarly, the phrase "if it is determined that" or "if (the condition or event stated) is detected" can be construed as "upon determining" or "in response to determining" or "upon detecting (the condition or event stated)" or "in response to detecting (a stated condition or event)", depending on the context. The term "pre-defined" or "predefined rule" can be implemented by pre-storing a corresponding code or table in a device (for example, including the terminal device and the network device) or in other manners that can be used for indicating related information, and the disclosure is not limited in this regard. For example, the "pre-defined" can mean defined in a protocol. It should also be understood that, in embodiments of the disclosure, the "protocol" can refer to a communication standard protocol, which can include, for example, an LTE protocol, an NR protocol, and a protocol applied to a future communication system, and the disclosure is not limited in this regard. In addition, in embodiments of the disclosure, "and/or" herein only describes an association between associated objects, which means that there can be three relationships. For example, *A* and/or *B* can mean *A* alone, both *A* and *B* exist, and *B* alone. Furthermore, the character "/" herein generally indicates that the associated objects are in an "or" relationship.

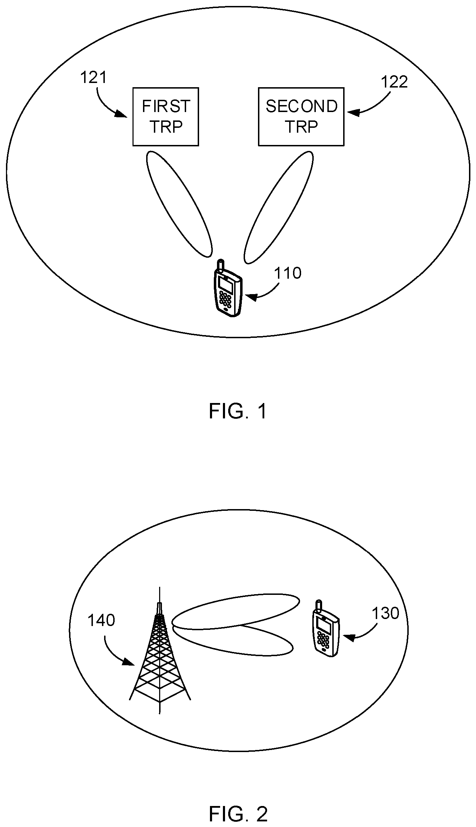

FIG. 1 is an exemplary diagram illustrating a 5^{th}-generation (5G) communication system 100 according to embodiments of the disclosure.

As illustrated in FIG. 1, the communication system 100 can include a terminal device 110, a first transmission reception point (TRP) 121, and a second TRP 122. The first TRP 121 and the second TRP 122 each can communicate with the terminal device 110 via an air interface. Specifically, the first TRP 121 and the second TRP 122 can independently schedule one terminal device 110 to perform data transmission.

For example, the terminal device 110 detects a physical downlink control channel (PDCCH) from the first TRP 121 and a PDCCH from the second TRP 122 in one slot, where these PDCCHs are used for scheduling multiple independent uplink (UL) data transmissions, and these independent UL transmissions may be scheduled in the same slot.

However, in the communication system illustrated in FIG. 1, there may be a variety of communication scenarios.

For example, the first TRP 121 and the second TRP 122 belong to the same cell, and a backhaul between the first TRP 121 and the second TRP 122 is ideal, that is, information exchange can be performed quickly and dynamically.

For another example, the first TRP 121 and the second TRP 122 belong to the same cell, but the backhaul between the first TRP 121 and the second TRP 122 is non-ideal, that is, the first TRP 121 and the second TRP 122 cannot perform information exchange quickly, and can only perform data exchange that is relatively slow.

For another example, the first TRP 121 and the second TRP 122 belong to different cells, and the backhaul between the first TRP 121 and the second TRP 122 is ideal.

For another example, the first TRP 121 and the second TRP 122 belong to different cells, but the backhaul between the first TRP 121 and the second TRP 122 is non-ideal.

A network device can send different NR-PDCCHs/NR-physical downlink shared channels (NR-PDSCHs) to the terminal device from multiple TRPs, that is, the terminal device receives downlink (DL) information on multiple DLs, where each DL has corresponding UL information that is to be transmitted, and the UL information at least includes one of the following signals: acknowledgement/negative-acknowledgement (ACK/NACK) corresponding to each DL, information to be reported such as channel state information (CSI) corresponding to each DL, or UL data.

As can be seen, if the terminal device 110 further needs to send UL information on ULs corresponding to the multiple DLs, it will result in excessively high complexity and power consumption of the terminal device.

In view of the above problems, embodiments of the disclosure provide a method for UL-signal transmission. The network device indicates to the terminal device a transmission mode for an UL signal, which is possible to effectively reduce complexity and power consumption of the terminal device.

It should be understood that, embodiments of the disclosure are elaborated by taking the 5G communication system 100 as an example, but embodiments of the disclosure are not limited thereto. That is, technical solutions of embodiments of the disclosure can be applied to any communication system in which multiple network devices can independently schedule one terminal to perform data transmission. For example, if the TRPs in FIG. 1 are mapped to beams, then an example of an application scenario illustrated in FIG. 2 can be obtained. The scenario includes a terminal device 130 and a network device 140, where there are multiple beams between the terminal device 130 and the network device 140.

For example, a global system of mobile communication (GSM), a code division multiple access (CDMA) system, a wideband code division multiple access (WCDMA) system, a general packet radio service (GPRS), an LTE system, an LTE time division duplex (LTE-TDD) system, a universal mobile telecommunication system (UMTS), and the like.

Various embodiments of the disclosure are described in connection with a network device and a terminal device.

The network device 130 can refer to any entity at a network side for sending or receiving a signal, and can be, for example, a user equipment (UE) of machine type communication (MTC), a base transceiver station (BTS) in GSM or CDMA, a base station (NodeB) in WCDMA, an evolutional Node B (eNB or eNodeB) in LTE, a base station device in a 5G network, or the like.

In addition, the terminal device 110 can be any terminal device. Specifically, the terminal device 110 can communicate with one or more core networks via a radio access network (RAN), and can also be referred to as an access terminal, a UE, a subscriber unit, a subscriber station, a mobile station, a remote station, a remote terminal, a mobile device, a user terminal, a terminal, a wireless communication device, a user agent, or a user device, etc. For example, the terminal device can be a cellular radio telephone, a cordless telephone, a session initiation protocol (SIP) telephone, a wireless local loop (WLL) station, a personal digital assistant (PDA), a device with wireless communication functions such a handheld device or a computing device, other processing devices coupled with a wireless modem, an in-vehicle device, a wearable device, a terminal device in a 5G network, or the like.

For better understanding of embodiments of the disclosure, the content related to a neural network(NN) is described below.

### 1. NN.

An NN model is an operation model consisting of multiple neuron nodes connected with each other, where a connection between nodes represents a weighted value, which is referred to as a weight, of an input signal for an output signal. At each node, weighted summation (SUM) is performed on different input signals, and then the signals subject to weighted summation are passed through a specific activation function (*f*) and then are output.

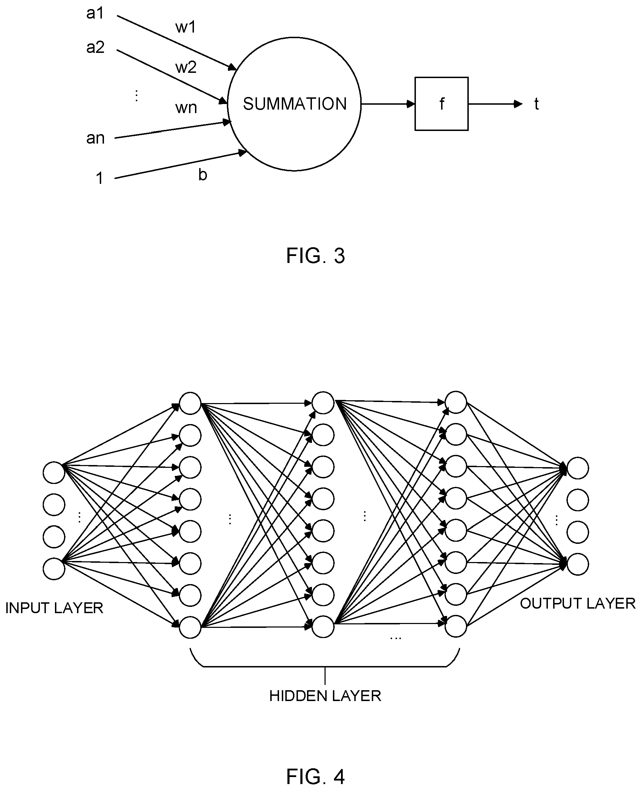

FIG. 3 is a schematic diagram of a neuron structure provided in embodiments of the disclosure.

As illustrated in FIG. 3, a1, a2,..., an represent input signals, *w*1, *w2,...,* wn represent weights, *f* represents an activation function, and t represents an output. That is, at the node, weight summation is performed on *a*1, *a*2,..., *a*n according to *w*1*, w*2*,..., w*n, and *t* is output after the weighted sum is passed through a specific activation function (*f*).

FIG. 4 illustrates an example of a structure of an NN provided in embodiments of the disclosure.

As illustrated in FIG. 4, the NN includes an input layer, a hidden layer, and an output layer, and different outputs can be obtained by means of different connection modes, weights, and activation functions of multiple neurons, thereby fitting a mapping between inputs and outputs. When each previous layer node is connected to all its next layer nodes, the NN is a fully-connected NN, and can also be referred to as a deep neural network (DNN).

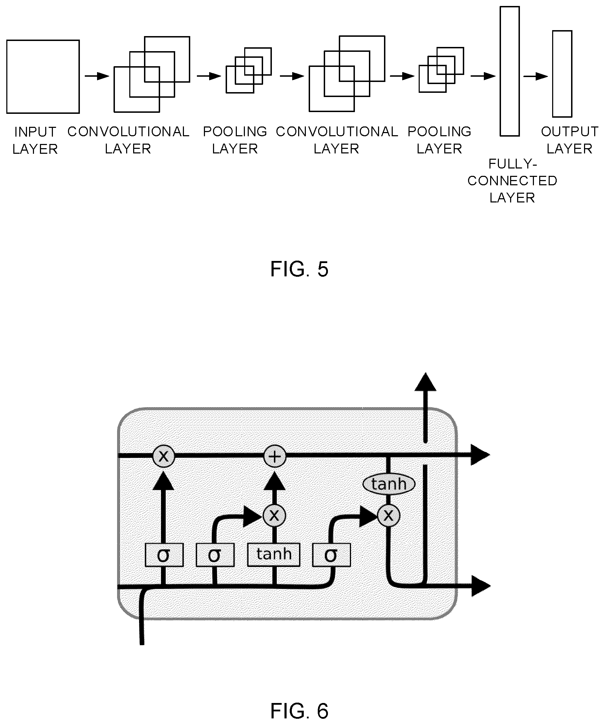

FIG. 5 is a schematic diagram of a convolutional neural network (CNN) provided in embodiments of the disclosure.

As illustrated in FIG. 5, the basic structure of a CNN includes an input layer, multiple convolutional layers, multiple pooling layers, a fully-connected layer, and an output layer. Each neuron in a convolution kernel in the convolutional layer is locally connected to an input of the neuron, and a maximum value or an average value of a local region of a certain layer is extracted by introducing a pooling layer. As such, it is possible to effectively reduce parameters of a network and mine local features, which is conducive to quick convergence of a CNN and thus can achieve excellent performance.

A recurrent neural network (RNN) is a neural network for modeling sequential data, and has achieved remarkable achievements in the field of natural language processing, such as machine translation and voice recognition. Specifically, the network remembers previous information, and applies the information to calculation of the current output. That is, nodes between hidden layers are connected rather than unconnected, and an input of the hidden layer includes not only the input layer but also a previous output of the hidden layer. A common RNN includes a long short-term memory (LSTM) and a gated recurrent unit (GRU).

FIG. 6 is a schematic diagram of an LSTM unit provided in embodiments of the disclosure.

As illustrated in FIG. 6, the basic structure of an LSTM unit can include an activation function (*tanh*)*,* an input gate (the 1^{st} σ from left to right), a forget gate (the 2^{nd} σ from left to right), and an output gate (the 3^{rd} σ from left to right). After one information enters the LSTM unit, whether the information is useful can be determined according to a rule, and only information that passes algorithm authentication is remembered, while information that does not pass algorithm authentication is forgotten through the forget gate. Different from the RNN that only takes the latest state into consideration, the LSTM determines which state is to be remembered and which state is to be forgotten, which solves deficiency of the traditional RNN in terms of long-term memory.

### 2. Training of NN.

An NN can be obtained by training through procedures such as dataset construction, training, verification, and testing. In embodiments of the disclosure, it is assumed that the NN has already been trained in an offline manner or an online manner in advance. It should be noted that, the offline training and the online training are not mutually exclusive. Firstly, the network (NW) can obtain a static training result in an offline training manner, which can be referred to as offline training herein. During use of the NN by the NW or a user equipment (UE), with further measurement and/or reporting of the UE, the NN can continue to collect more data in order for real-time online training to optimize parameters of the NN, thereby achieving better inference and prediction results.

In order to facilitate understanding of the solutions provided in the disclosure, the following describes a method for positioning the terminal device.

When positioning the terminal device, the positioning method can include the following three types. UE-based positioning method: a terminal directly calculates a location of a target UE. UE-assisted/location management function (LMF)-based positioning method: the terminal device reports a measurement result to an LMF, and the LMF calculates the location of the target UE according to the measurement result collected. Next-generation radio access network (NG-RAN) node assisted positioning method: a base station reports a measurement result of a TRP to the LMF, and the LMF calculates the location of the target UE according to the measurement result collected.

In order to support various positioning methods, a DL-based positioning method and an UL-based positioning method are introduced in release 16 (R16) NR. With regard to the DL-based positioning method, a positioning reference signal (PRS) is introduced for a DL. With regard to the UL-based positioning method, a sounding reference signal (SRS) for positioning is introduced for an UL.

The DL-based positioning method mainly involves three major entities, namely a terminal (UE), multiple TRPs, and a location server. The multiple TRPs located around the terminal device participate in cellular positioning. Each base station may be one TRP, and there may be multiple TRPs served by one base station. The location server is responsible for the whole positioning procedure, and can include an LMF.

The DL-based positioning method can be classified into two categories, i. e. a terminal-assisted (UE-assisted) positioning method and a terminal-based (UE-based) positioning method. With regard to the terminal-assisted positioning method, the UE is responsible for positioning-related measurement, and a network calculates location information according to a measurement result reported by the UE. With regard to the terminal-based positioning method, the UE performs positioning-related measurement, and calculates the location information based on a measurement result.

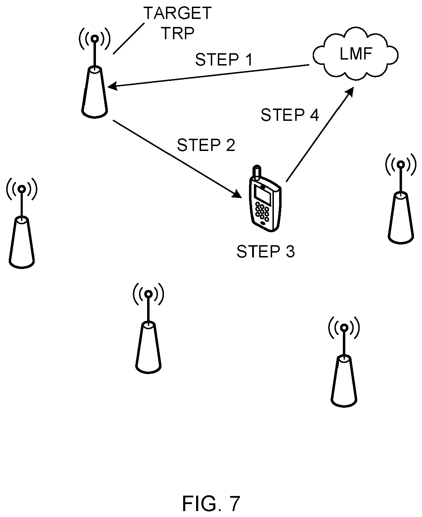

FIG. 7 is a schematic flowchart of a terminal-assisted positioning method provided in embodiments of the disclosure.

As illustrated in FIG. 7, the terminal-assisted positioning method can include the following.
Step 1, a location server notifies a related configuration to a target TRP, where the related configuration can include configuration information of a PRS and/or a type of a measurement result that is to be reported by a terminal, etc.
Step 2, the TRP sends the PRS.
Step 3, the terminal receives the PRS and performs measurement. It should be noted that, measurement results obtained by the terminal through different positioning methods may also be different.
Step 4, the terminal feeds back the measurement result to the location server. For example, the terminal feeds back the measurement result to the location server via a base station, so that the location server calculates information related to a location of the terminal device.

With regard to the terminal-based (UE-based) positioning method, in the 4^{th} step described above, instead of reporting the measurement result to the location server and then performing calculation by the location server, the terminal directly calculates location-related information according to the measurement result. In the terminal-based positioning method, the terminal needs to know location information corresponding to the TRP, and therefore, a network needs to notify to a UE the location information corresponding to the TRP in advance.

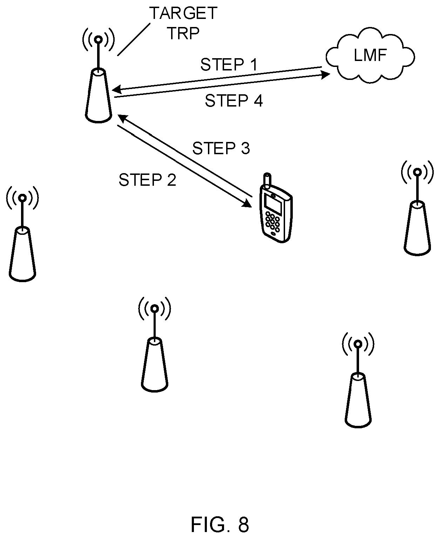

FIG. 8 is a schematic flowchart of an UL-based positioning method provided in embodiments of the disclosure.

As illustrated in FIG. 8, the UL-based positioning method includes the following.
Step 1, a location server notifies a related configuration to a target TRP, where the related configuration can include configuration information of an SRS for positioning and/or a type of a measurement result that is to be reported by a terminal, etc.
Step 2, a base station sends related signaling to the terminal.
Step 3, the terminal sends the SRS for positioning to the target TRP according to the instruction received.
Step 4, the TRP performs measurement on the SRS for positioning, and sends a measurement result to the location server, so that the location server calculates information related to a location of the terminal device.

As can be seen from the above, when positioning the terminal device, the location of the terminal device can be estimated by the terminal device based on the measurement result, or the location of the terminal device can be estimated by the LMF after the terminal device reports the measurement result to the LMF, or the location of the terminal device can be calculated by the LMF after the base station performs measurement and reports the measurement result to the LMF. However, it should be noted that, the terminal device or LMF usually estimates the location of the terminal device by means of a traditional algorithm, for example, estimates the location of the terminal device by means of Chan's algorithm or Taylor expansion. However, an excessive amount of calculation is required for the traditional algorithm, which results in excessive cost for location estimation. In addition, if the traditional algorithm is adopted, it is hard to ensure accuracy of location estimation. In view of this, embodiments of the disclosure provide a location estimation method, an information transmission method, a terminal device, and a network device, which can not only reduce estimation cost of location estimation, but also facilitate improving accuracy of location estimation.

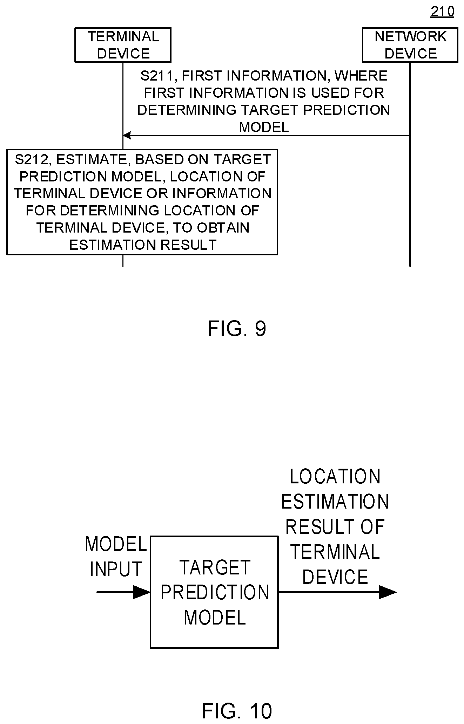

FIG. 9 is a schematic flowchart of a wireless communication method 210 provided in embodiments of the disclosure. The wireless communication method 210 can be performed interactively by a terminal device and a network device. The terminal device illustrated in FIG. 9 can be the terminal device 110 illustrated in FIG. 1 or the terminal device 130 illustrated in FIG. 2. The network device illustrated in FIG. 9 can be the first TRP 121 or the second TRP 122 illustrated in FIG. 1, or can be the network device 140 illustrated in FIG. 2.

As illustrated in FIG. 9, the method 210 can include some or all of the following.
S211, first information sent by a network device is received, where the first information is used for determining a target prediction model.
S212, a location of a terminal device or information for determining the location of the terminal device is estimated based on the target prediction model, to obtain an estimation result.

Exemplarily, the network device sends the first information to the terminal device. After receiving the first information, the terminal device can determine the target prediction model based on the first information, and then estimate, based on the target prediction model, the location of the terminal device or the information for determining the location of the terminal device, so as to obtain the estimation result.

In embodiments, instead of using a traditional algorithm to estimate the location of the terminal device, the terminal device estimates, based on the target prediction model, the location of the terminal device or the information for determining the location of the terminal device, so as to obtain the estimation result. As such, it is possible to not only reduce estimation cost of location estimation, but also facilitate improving accuracy of location estimation.

It should be noted that, the target prediction model can be deployed at a UE side, or can be deployed at an LMF side, or can be deployed at both the UE side and the LMF side.

In addition, the target prediction model can be combined with any positioning method to replace a traditional algorithm, to estimate the location of the terminal device, thereby improving positioning accuracy. For example, the target prediction model can be combined with at least one of the following positioning methods: a DL-based positioning method, an UL-based positioning method, a terminal-assisted (UE-assisted) positioning method, or a terminal-based (UE-based) positioning method.

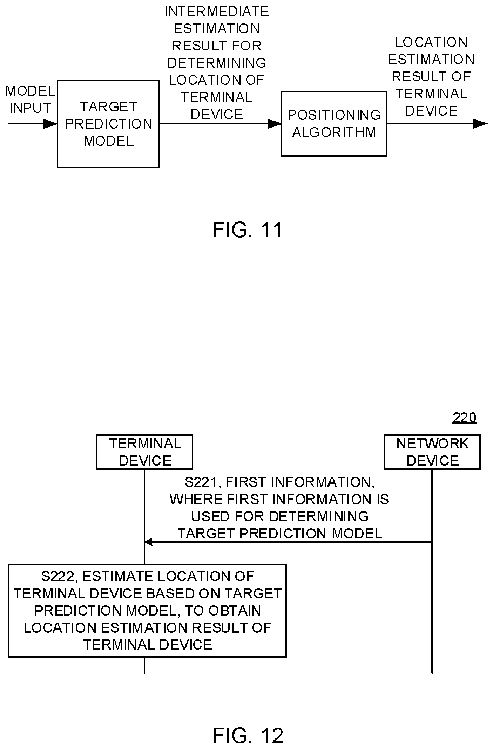

In addition, in combination with a positioning method, the target prediction model can be applied to estimate directly the location of the terminal device, or can be applied to estimate assistance information for determining the location of the terminal device, that is, the target prediction model can be applied to direct positioning, or can be applied to assisted positioning. FIG. 10 is a schematic diagram illustrating direct positioning by applying the target prediction model provided in embodiments of the disclosure, and FIG. 11 is a schematic diagram illustrating assisted positioning by applying the target prediction model provided in embodiments of the disclosure. As illustrated in FIG. 10, if the target prediction model is applied for direct positioning, with the target prediction model, a location estimation result of the terminal device can be directly output based on a model input. As illustrated in FIG. 11, if the target prediction model is applied for assisted positioning, with the target model, an intermediate estimation result for determining the location of the terminal device can be output based on a model input, and then calculation is performed on the intermediate estimation result by means of a positioning algorithm, so as to obtain a location estimation result of the terminal device.

Further, when performing assisted positioning with the target prediction model, if the model input of the target prediction model is information obtained by performing, by the terminal device, measurement on a reference signal sent by at least one TRP, then the intermediate estimation result can include at least one information for determining the location of the terminal device, where the at least one information corresponds to the at least one TRP, for example, the at least one information is in one-to-one correspondence with the at least one TRP.

In some embodiments, the first information includes indication information of the target prediction model.

In some embodiments, the indication information of the target prediction model includes at least one of: a model index of the target prediction model, a model format of the target prediction model, or a model configuration of the target prediction model.

Exemplarily, the model index of the target prediction model is used for uniquely identifying the target prediction model.

Exemplarily, the model format of the target prediction model or the model configuration of the target prediction model can include: a model structure of the target prediction model and/or a parameter of the target prediction model trained.

Exemplarily, when estimating, by the terminal device, the location of the terminal device or the information for determining the location of the terminal device based on the target prediction model, an input of the target prediction model can be information obtained by performing measurement on a reference signal by the terminal device. For example, the input of the target prediction model can be information obtained by performing, by the terminal device, measurement on at least one of the following reference signals: a synchronization signal / physical broadcast channel (PBCH) block (SSB), a PRS, or a CSI reference signal (CSI-RS).

It should be noted that, during positioning of the terminal device with the target prediction model, if the prediction model matches the environment or scenario, it is possible to greatly improve positioning accuracy; on the contrary, if the prediction model applied is not adapted to the environment or scenario, positioning accuracy will be greatly reduced. Therefore, if the prediction model is deployed at a terminal-device side, how the terminal device selects a suitable target prediction model and performs measurement with respect to the target prediction model is critical to improving positioning accuracy. In view of this, in embodiments of the disclosure, the network device can assist the terminal device such that the target prediction model determined by the terminal device can be a prediction model adapted to the environment or scenario, for example, indicate to the terminal device a target prediction model adapted to the same environment or the same scenario from the perspective of configuration information or TRP.

In some embodiments, reference-signal configuration information received by the terminal device includes one or more first configuration information, where the first information is used for determining a target prediction model associated with at least one first configuration information in the one or more first configuration information. For example, the first information includes indication information of the at least one first configuration information.

Exemplarily, if the at least one first configuration information is implemented as multiple first configuration information, a difference between any two first configuration information in the at least one first configuration information is less than or equal to a preset threshold.

In embodiments, the difference between any two first configuration information in the at least one first configuration information is less than or equal to the preset threshold, which is beneficial for the network device to associate similar configuration information to the same prediction model from the perspective of configuration information, such that the target prediction model can correspond to the same scenario or the same environment. As such, when estimating the location of the terminal device or the information used for determining the location of the terminal device based on the target prediction model, it is beneficial to improving accuracy of location estimation.

Exemplarily, the reference-signal configuration information received by the terminal device is configuration information of any one of: an SSB, a CSI-RS, or a PRS. For example, the reference-signal configuration information received by the terminal device is configuration information of a PRS received from the network device. In other alternative embodiments, the reference-signal configuration information received by the terminal device can also be reference-signal configuration information received from a location server or an access-network device.

Exemplarily, before receiving the reference-signal configuration information, the terminal device can firstly send a request message, where the request message is used for requesting the reference-signal configuration information.

In other words, when estimating, by the terminal device, the location of the terminal device or the information for determining the location of the terminal device based on the target prediction model, the input of the target prediction model can be information obtained by performing measurement on the SSB, the CSI-RS, or the PRS by the terminal device.

Exemplarily, the one or more first configuration information includes at least one of: one or more positioning frequency layers (PFLs), one or more reference-signal resource sets, or one or more reference-signal resources.

In other words, the one or more first configuration information is used for configuring at least one of the following for a reference signal of the terminal device: one or more PFLs, one or more reference-signal resource sets, or one or more reference-signal resources. Accordingly, the first information can be implemented as follows.
1. If the one or more first configuration information is used for configuring one or more PFLs, the first information is used for determining a target prediction model associated with at least one PFL in the one or more PFLs.
   For example, assuming that three PFLs (denoted as PFL0, PFL1, and PFL2) are configured for the reference signal of the terminal device via the one or more first configuration information, if the first information indicates that a prediction model associated with PFL0 and PFL1 is the target prediction model, it indicates that the target prediction model is applied to a reference signal(s) on each of PFL0 and PFL1.
2. If the one or more first configuration information is used for configuring one or more reference-signal resource sets, the first information is used for determining a target prediction model associated with at least one reference-signal resource set in the one or more reference-signal resource sets.
   For example, assuming that via the one or more first configuration information, three PFLs (denoted as PFL 0, PFL 1, and PFL 2) are configured for the reference signal of the terminal device, and two resource sets (denoted as resource set 0 and resource set 1) are configured for each PFL, if the first information indicates that a prediction model associated with resource set 0 is the target prediction model, it indicates that the target prediction model is applied to a reference signal(s) received on resource set 0 in each of PFL0, PFL1, and PFL2.
3. If the one or more first configuration information is used for configuring one or more reference-signal resources, the first information is used for determining a target prediction model associated with at least one reference-signal resource in the one or more reference-signal resources.
   For example, assuming that via the one or more first configuration information, three PFLs (denoted as PFL0, PFL1, and PFL2) are configured for the reference signal of the terminal device, two resource sets (denoted as resource set 0 and resource set 1) are configured for each PFL, and four resources (denoted as S0, S1, S2, and S3) are configured for each resource set, if the first information indicates that a prediction model associated with S1 is the target prediction model, it indicates that the target prediction model can be applied to a reference signal(s) received on S1 in each of PFL0, PFL1, and PFL2.
4. If the one or more first configuration information is used for configuring one or more PFLs and one or more reference-signal resource sets, the first information is used for determining a target prediction model which is associated with at least one PFL in the one or more PFLs and associated with at least one reference-signal resource set in the one or more reference-signal resource sets.
   For example, assuming that via the one or more first configuration information, three PFLs (denoted as PFL 0, PFL 1, and PFL 2) are configured for the reference signal of the terminal device, and two resource sets (denoted as resource set 0 and resource set 1) are configured for each PFL, if the first information indicates that a prediction model which is associated with PFL0 and PFL1 and associated with resource set 0 is the target prediction model, it indicates that the target prediction model is applied to a reference signal(s) received on resource set 0 in each of PFL0 and PFL1.
5. If the one or more first configuration information is used for configuring one or more PFLs and one or more reference-signal resources, the first information is used for determining a target prediction model which is associated with at least one PFL in the one or more PFLs and associated with at least one reference-signal resource in the one or more reference-signal resources.
   For example, assuming that via the one or more first configuration information, three PFLs (denoted as PFL0, PFL1, and PFL2) are configured for the reference signal of the terminal device, two resource sets (denoted as resource set 0 and resource set 1) are configured for each PFL, and four resources (denoted as S0, S1, S2, and S3) are configured for each resource set, if the first information indicates that a prediction model which is associated with PFL0 and PFL1 and associated with S1 is the target prediction model, it indicates that the target prediction model can be applied to a reference signal(s) received on S1 in each of PFL0 and the PFL1.
6. If the one or more first configuration information is used for configuring one or more reference-signal resource sets and one or more reference-signal resources, the first information is used for determining a target prediction model which is associated with at least one reference-signal resource set in the one or more reference-signal resource sets and associated with at least one reference-signal resource in the one or more reference-signal resources.
   For example, assuming that via the one or more first configuration information, three PFLs (denoted as PFL0, PFL1, and PFL2) are configured for the reference signal of the terminal device, two resource sets (denoted as resource set 0 and resource set 1) are configured for each PFL, and four resources (denoted as S0, S1, S2, and S3) are configured for each resource set, if the first information indicates that a prediction model which is associated with resource set 0 and associated with S1 is the target prediction model, it indicates that the target prediction model can be applied to a reference signal(s) received on S1 in resource set 0 in each of PFL0, PFL1, and PFL2.
7. If the one or more first configuration information is used for configuring one or more PFLs, one or more reference-signal resource sets, and one or more reference-signal resources, the first information is used for determining a target prediction model which is associated with at least one PFL in the one or more PFLs, associated with at least one reference-signal resource set in the one or more reference-signal resource sets, and associated with at least one reference-signal resource in the one or more reference-signal resources.
   For example, assuming that via the one or more first configuration information, three PFLs (denoted as PFL0, PFL1, and PFL2) are configured for the reference signal of the terminal device, two resource sets (denoted as resource set 0 and resource set 1) are configured for each PFL, and four resources (denoted as S0, S1, S2, and S3) are configured for each resource set, if the first information indicates that a prediction model which is associated with PFL0 and PFL1, associated with resource set 0, and associated with S1 is the target prediction model, it indicates that the target prediction model can be applied to a reference signal(s) received on S1 in resource set 0 in each of PFL0 and PFL1.

Exemplarily, the number of the at least one first configuration information is greater than or equal to the number of input signals of the target prediction model during training of the target prediction model. For example, the reference-signal configuration information received by the terminal device includes one or more first configuration information. If the first information is used for determining a target prediction model associated with at least one first configuration information in the one or more first configuration information, the number of the at least one first configuration information is greater than or equal to the number of input signals of the target prediction model during training of the target prediction model.

In some embodiments, the first information is used for determining a target prediction model associated with at least one first TRP.

In other words, when estimating, by the terminal device, the location of the terminal device or the information for determining the location of the terminal device based on the target prediction model, the input of the target prediction model can be information obtained by performing, by the terminal device, measurement on a reference signal sent by the at least one first TRP.

Exemplarily, the terminal device is located within coverage of each TRP in the at least one TRP.

In some embodiments, the first information includes indication information of the at least one first TRP.

Exemplarily, the indication information of the at least one first TRP can include an index or an identity (ID) of each first TRP.

Exemplarily, the indication information of the at least one first TRP can include at least one DL reference-signal ID, where the at least one DL reference-signal ID is in one-to-one correspondence with the at least one first TRP. That is, the at least one first TRP can be indicated by the at least one DL reference-signal ID. For example, the DL reference-signal ID can be *dl-PRS-ID,* that is, the at least one DL reference-signal ID can be at least one *dl-PRS-ID.*

In some embodiments, reference-signal configuration information corresponding to the first TRP includes one or more first configuration information, and the first information is used for determining a target prediction model associated with at least one first configuration information in the one or more first configuration information. For example, the first information includes indication information of the at least one first configuration information.

It should be noted that, the first TRP can be a certain first TRP in the at least one first TRP, or can be each first TRP in the at least one first TRP.

For example, if the first TRP is a certain first TRP in the at least one first TRP, the first information is used for determining a target prediction model associated with at least one first configuration information in one or more first configuration information corresponding to the certain first TRP. For another example, if the first TRP is each first TRP in the at least one first TRP, the first information is used for determining a target prediction model associated with at least one first configuration information in one or more first configuration information corresponding to each first TRP.

In some embodiments, the reference-signal configuration information corresponding to the first TRP can be configuration information of a PRS.

In other words, when estimating, by the terminal device, the location of the terminal device or the information for determining the location of the terminal device based on the target prediction model, the input of the target prediction model can be information obtained by performing, by the terminal device, measurement on a PRS sent by the at least one TRP.

In some embodiments, the one or more first configuration information includes at least one of: one or more PFLs, one or more reference-signal resource sets, or one or more reference-signal resources.

Exemplarily, one or more first configuration information corresponding to TRP 1 is used for configuring at least one of the following for a reference signal corresponding to TRP 1: one or more PFLs, one or more reference-signal resource sets, or one or more reference-signal resources. Accordingly, the first information can be implemented as follows.
1. If the one or more first configuration information corresponding to TRP 1 is used for configuring one or more PFLs, the first information is used for determining a target prediction model associated with at least one PFL in the one or more PFLs.
   For example, assuming that three PFLs (denoted as PFL0, PFL1, and PFL2) are configured for the reference signal corresponding to TRP 1 via the one or more first configuration information corresponding to TRP 1, if the first information indicates that a prediction model associated with the PFL0 and the PFL1 is the target prediction model, it indicates that the target prediction model is applied to a reference signal(s) received from TRP 1 on each of PFL0 and PFL1.
2. If the one or more first configuration information corresponding to TRP 1 is used for configuring one or more reference-signal resource sets, the first information is used for determining a target prediction model associated with at least one reference-signal resource set in the one or more reference-signal resource sets.
   For example, assuming that via the one or more first configuration information corresponding to TRP 1, three PFLs (denoted as PFL 0, PFL 1, and PFL 2) are configured for the reference signal corresponding to TRP 1, and two resource sets (denoted as resource set 0 and resource set 1) are configured for each PFL, if the first information indicates that a prediction model associated with resource set 0 is the target prediction model, it indicates that the target prediction model is applied to a reference signal(s) received from TRP 1 on resource set 0 in each of PFL0, PFL1, and PFL2.
3. If the one or more first configuration information corresponding to TRP 1 is used for configuring one or more reference-signal resources, the first information is used for determining a target prediction model associated with at least one reference-signal resource in the one or more reference-signal resources.
   For example, assuming that via the one or more first configuration information corresponding to TRP 1, three PFLs (denoted as PFL0, PFL1, and PFL2) are configured for the reference signal corresponding to TRP 1, two resource sets (denoted as resource set 0 and resource set 1) are configured for each PFL, and four resources (denoted as S0, S1, S2, and S3) are configured for each resource set, if the first information indicates that a prediction model associated with S1 is the target prediction model, it indicates that the target prediction model can be applied to a reference signal(s) received from TRP 1 on S1 in each of PFL0, PFL1, and PFL2.
4. If the one or more first configuration information corresponding to TRP 1 is used for configuring one or more PFLs and one or more reference-signal resource sets, the first information is used for determining a target prediction model which is associated with at least one PFL in the one or more PFLs and associated with at least one reference-signal resource set in the one or more reference-signal resource sets.
   For example, assuming that via the one or more first configuration information corresponding to TRP 1, three PFLs (denoted as PFL 0, PFL 1, and PFL 2) are configured for the reference signal corresponding to TRP 1, and two resource sets (denoted as resource set 0 and resource set 1) are configured for each PFL, if the first information indicates that a prediction model which is associated with PFL0 and PFL1 and associated with resource set 0 is the target prediction model, it indicates that the target prediction model is applied to a reference signal(s) received from TRP 1 on resource set 0 in each of PFL0 and PFL1.
5. If the one or more first configuration information corresponding to TRP 1 is used for configuring one or more PFLs and one or more reference-signal resources, the first information is used for determining a target prediction model which is associated with at least one PFL in the one or more PFLs and associated with at least one reference-signal resource in the one or more reference-signal resources.
   For example, assuming that via the one or more first configuration information corresponding to TRP 1, three PFLs (denoted as PFL0, PFL1, and PFL2) are configured for the reference signal corresponding to TRP 1, two resource sets (denoted as resource set 0 and resource set 1) are configured for each PFL, and four resources (denoted as S0, S1, S2, and S3) are configured for each resource set, if the first information indicates that a prediction model which is associated with PFL0 and PFL1 and associated with S1 is the target prediction model, it indicates that the target prediction model can be applied to a reference signal(s) received from TRP 1 on S1 in each of PFL0 and PFL1.
6. If the one or more first configuration information corresponding to TRP 1 is used for configuring one or more reference-signal resource sets and one or more reference-signal resources, the first information is used for determining a target prediction model which is associated with at least one reference-signal resource set in the one or more reference-signal resource sets and associated with at least one reference-signal resource in the one or more reference-signal resources.
   For example, assuming that via the one or more first configuration information corresponding to TRP 1, three PFLs (denoted as PFL0, PFL1, and PFL2) are configured for the reference signal corresponding to TRP 1, two resource sets (denoted as resource set 0 and resource set 1) are configured for each PFL, and four resources (denoted as S0, S1, S2, and S3) are configured for each resource set, if the first information indicates that a prediction model which is associated with resource set 0 and associated with S1 is the target prediction model, it indicates that the target prediction model can be applied to a reference signal(s) received from TRP 1 on S1 in resource set 0 in each of PFL0, PFL1, and PFL2.
7. If the one or more first configuration information corresponding to TRP 1 is used for configuring one or more PFLs, one or more reference-signal resource sets, and one or more reference-signal resources, the first information is used for determining a target prediction model which is associated with at least one PFL in the one or more PFLs, associated with at least one reference-signal resource set in the one or more reference-signal resource sets, and associated with at least one reference-signal resource in the one or more reference-signal resources.
   For example, assuming that via the one or more first configuration information corresponding to TRP 1, three PFLs (denoted as PFL0, PFL1, and PFL2) are configured for the reference signal corresponding to TRP 1, two resource sets (denoted as resource set 0 and resource set 1) are configured for each PFL, and four resources (denoted as S0, S1, S2, and S3) are configured for each resource set, if the first information indicates that a prediction model which is associated with PFL0 and PFL1, associated with resource set 0, and associated with S1 is the target prediction model, it indicates that the target prediction model can be applied to a reference signal(s) received from TRP 1 on S1 in resource set 0 in each of PFL0 and PFL1.

Exemplarily, the number of the at least one first TRP is greater than or equal to the number of input signals of the target prediction model during training of the target prediction model. For example, if the first information is used for determining a target prediction model associated with the at least one first TRP, the number of the at least one first TRP is greater than or equal to the number of input signals of the target prediction model during training of the target prediction model.

FIG. 12 is a schematic flowchart of a direct-positioning-based location estimation method 220 provided in embodiments of the disclosure.

As illustrated in FIG. 12, the location estimation method 220 can include the following.
S221, a terminal device receives first information sent by a network device, where the first information is used for determining a target prediction model.
S222, the terminal device estimates a location of the terminal device based on the target prediction model, to obtain a location estimation result of the terminal device.

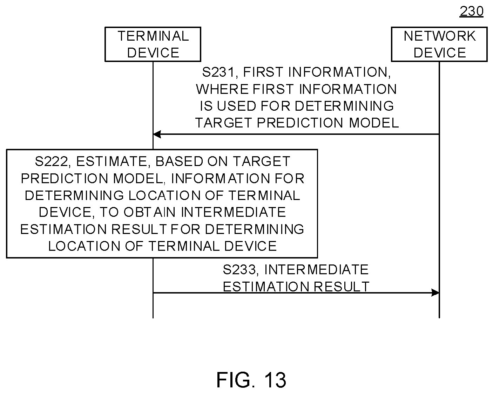

FIG. 13 is a schematic flowchart of an assisted-positioning-based location estimation method provided in embodiments of the disclosure.

As illustrated in FIG. 13, the location estimation method 230 can include the following.
S231, a terminal device receives first information sent by a network device, where the first information is used for determining a target prediction model.
S222, the terminal device estimates, based on the target prediction model, information for determining a location of the terminal device, to obtain an intermediate estimation result for determining the location of the terminal device.
S233, the terminal device sends the intermediate estimation result to the network device.

In some embodiments, the method 210 can further include the following. The terminal device receives second information sent by the network device, where the second information is used for determining a target model set, and the first information indicates the target prediction model from the target model set.

Exemplarily, the network device sends the second information to the terminal device. After receiving the second information, the terminal device can determine the target model set based on the second information, and then determine the target prediction model from the target model set based on the first information, so that the location of the terminal device or the information for determining the location of the terminal device can be estimated based on the target prediction model, to obtain the estimation result.

In embodiments, the second information received by the terminal device is used for determining the target model set, which is beneficial for the network device to indicate the target prediction model from different model sets and thus beneficial to improving flexibility of the target prediction model.

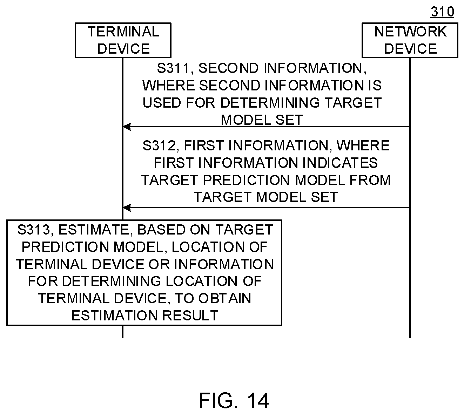

FIG. 14 is another schematic flowchart of a location estimation method 310 provided in embodiments of the disclosure.

As illustrated in FIG. 14, the location estimation method 310 can include the following.
S311, a terminal device receives second information sent by a network device, where the second information is used for determining a target model set.
S312, the terminal device receives first information sent by the network device, where the first information indicates a target prediction model from the target model set.
S313, the terminal device estimates, based on the target prediction model, a location of the terminal device or information for determining the location of the terminal device, to obtain an estimation result.

In some embodiments, the second information includes indication information of the target model set.

In some embodiments, the indication information of the target model set includes at least one of: a set index of the target model set, a set format of the target model set, or a model configuration of the target model set.

Exemplarily, the set index of the target model set is used for uniquely identifying the target model set.

Exemplarily, the set format of the target model set or the model configuration of the target model set can include: a model structure of each prediction model in the target model set and/or a parameter of each prediction model trained in the target model set.

In some embodiments, reference-signal configuration information received by the terminal device includes one or more second configuration information, where the second information used for determining a target model set associated with at least one second configuration information in the one or more second configuration information. For example, the first information includes indication information of the at least one second configuration information.

Exemplarily, if the at least one second configuration information is implemented as multiple second configuration information, a difference between any two second configuration information in the at least two configuration information is less than or equal to a preset threshold.

In embodiments, the difference between any two second configuration information in the at least two configuration information is less than or equal to the preset threshold, which is beneficial for the network device to associate similar configuration information to the same model set from the perspective of configuration information, such that the target model set can correspond to the same scenario or the same environment. As such, by estimating the location of the terminal device or the information for determining the location of the terminal device based on the target prediction model, it is beneficial to improving accuracy of location estimation.

Exemplarily, the reference-signal configuration information received by the terminal device is configuration information of any one of: an SSB, a CSI-RS, or a PRS.

In other words, when estimating, by the terminal device, the location of the terminal device or the information for determining the location of the terminal device based on the target prediction model, the input of the target prediction model can be information obtained by performing measurement on the SSB, the CSI-RS, or the PRS by the terminal device.

Exemplarily, the one or more second configuration information includes at least one of: one or more PFLs, one or more reference-signal resource sets, or one or more reference-signal resources.

In other words, the one or more second configuration information is used for configuring at least one of the following for a reference signal of the terminal device: one or more PFLs, one or more reference-signal resource sets, or one or more reference-signal resources.

In some embodiments, the reference-signal configuration information received by the terminal device can include one or more second configuration information and one or more third configuration information, where the second information is used for determining a target model set associated with at least one second configuration information in the one or more second configuration information, and the first information is used for determining, from the target model set, a target prediction model associated with at least one third configuration information in the one or more third configuration information. For example, the second information includes indication information of the at least one second configuration information, and the first information includes indication information of the at least one third configuration information.

Exemplarily, the one or more third configuration information is used for configuring one or more PFLs, one or more reference-signal resource sets, and one or more reference-signal resources.

Exemplarily, the one or more second configuration information is different from the one or more third configuration information in terms of information type. For example, the one or more second configuration information can include one or more of: one or more PFLs, one or more reference-signal resource sets, and one or more reference-signal resources. The one or more third configuration information can include configuration information among the one or more PFLs, the one or more reference-signal resource sets, and the one or more reference-signal resources other than the one or more second configuration information.

Exemplarily, the terminal device can determine the target prediction model based on the second information and the first information specifically as follows.
1. If the one or more second configuration information is one or more PFLs, and the one or more third configuration information includes one or more reference-signal resource sets and/or one or more reference-signal resources, then the second information is used for determining a target model set associated with at least one PFL in the one or more PFLs. In this case, the first information is used for determining, from the target model set, a target prediction model associated with at least one reference-signal resource set in the one or more reference-signal resource sets; and/or the first information can be used for determining, from the target model set, a target prediction model associated with at least one reference-signal resource in the one or more reference-signal resources.
   For example, assuming that via the one or more second configuration information and the one or more third configuration information, three PFLs (denoted as PFLO, PFL1, and PFL2) are configured for the reference signal of the terminal device, two resource sets (denoted as resource set 0 and resource set 1) are configured for each PFL, and four resources (denoted as S0, S1, S2, and S3) are configured for each resource set, if the second information indicates that a model set associated with PFL0 and PFL1 is the target model set, it indicates that the target model set is applied to a reference signal(s) on each of PFL0 and PFL1. In this case, if the first information indicates that resource set 0 is associated with the target prediction model in the target model set, it indicates that the target prediction model is applied to a reference signal(s) received on resource set 0 in each of PFL0 and PFL1. Likewise, if the first information indicates that S1 is associated with the target prediction model in the target model set, it indicates that the target prediction model is applied to a reference signal(s) received on S1 in each of resource set 0 and resource set 1 in each of PFL0 and PFL1. Further, if the first information indicates that resource set 0 and S1 are associated with the target prediction model in the target model set, it indicates that the target prediction model is applied to a reference signal(s) received on S1 in resource set 0 in each of PFL0 and PFL1.
2. If the one or more second configuration information is one or more reference-signal resource sets, and the one or more third configuration information includes one or more PFLs and/or one or more reference-signal resources, then the second information is used for determining a target model set associated with at least one reference-signal resource set in the one or more reference-signal resource sets. In this case, the first information is used for determining a target prediction model associated with at least one PFL in the one or more PFLs; and/or the first information can be used for determining, from the target model set, a target prediction model associated with at least one reference-signal resource in the one or more reference-signal resources.
   For example, assuming that via the one or more second configuration information and the one or more third configuration information, three PFLs (denoted as PFL0, PFL1, and PFL2) are configured for the reference signal of the terminal device, two resource sets (denoted as resource set 0 and resource set 1) are configured for each PFL, and four resources (denoted as S0, S1, S2, and S3) are configured for each resource set, if the second information indicates that a model set associated with resource set 0 is the target model set, it indicates that the target model set is applied to a reference signal(s) received on resource set 0 in each of PFL0, PFL1, and PFL2. In this case, if the first information indicates that PFL0 and PFL1 are associated with the target prediction model in the target model set, it indicates that the target prediction model is applied to a reference signal(s) received on resource set 0 in each of PFL0 and PFL1. Likewise, if the first information indicates that S1 is associated with the target prediction model in the target model set, it indicates that the target prediction model is applied to a reference signal(s) received on S1 in resource set 0 in each of PFL0, PFL1, and PFL2. Further, if the first information indicates that PFL0, PFL1, and S1 are associated with the target prediction model in the target model set, it indicates that the target prediction model is applied to a reference signal(s) received on S1 in resource set 0 in each of PFL0 and PFL1.
3. If the one or more second configuration information is one or more reference-signal resources, and the one or more third configuration information includes one or more PFLs and/or one or more reference-signal resource sets, then the second information is used for determining a target model set associated with at least one reference-signal resource in the one or more reference-signal resources. In this case, the first information is used for determining a target prediction model associated with at least one reference-signal resource set in the one or more reference-signal resource sets; and/or the first information can be used for determining, from the target model set, a target prediction model associated with at least one PFL in the one or more PFLs.
   For example, assuming that via the one or more second configuration information and the one or more third configuration information, three PFLs (denoted as PFL0, PFL1, and PFL2) are configured for the reference signal of the terminal device, two resource sets (denoted as resource set 0 and resource set 1) are configured for each PFL, and four resources (denoted as S0, S1, S2, and S3) are configured for each resource set, if the second information indicates that a model set associated with S1 is the target model set, it indicates that the target model set is applied to a reference signal(s) received on S1 in each of resource set 0 and resource set 1 in each of PFL0, PFL1, and PFL2. In this case, if the first information indicates that resource set 0 is associated with the target prediction model in the target model set, it indicates that the target prediction model is applied to a reference signal(s) received on S1 in resource set 0 in each of PFL0, PFL1, and PFL2. Likewise, if the first information indicates that PFL0 and PFL1 are associated with the target prediction model in the target model set, it indicates that the target prediction model is applied to a reference signal(s) received on S1 in each of resource set 0 and resource set 1 in each of PFL0 and PFL1. Further, if the first information indicates that resource set 0, PFL0, and PFL1 are associated with the target prediction model in the target model set, it indicates that the target prediction model is applied to a reference signal(s) received on S1 in resource set 0 in each of PFL0 and PFL1.
4. If the one or more second configuration information includes one or more PFLs and one or more reference-signal resource sets, and the one or more third configuration information is one or more reference-signal resources, then the second information is used for determining a target model set which is associated with at least one PFL in the one or more PFLs and associated with at least one reference-signal resource set in the one or more reference-signal resource sets. In this case, the first information can be used for determining, from the target model set, a target prediction model associated with at least one reference-signal resource in the one or more reference-signal resources.
   For example, assuming that via the one or more second configuration information and the one or more third configuration information, three PFLs (denoted as PFL0, PFL1, and PFL2) are configured for the reference signal of the terminal device, two resource sets (denoted as resource set 0 and resource set 1) are configured for each PFL, and four resources (denoted as S0, S1, S2, and S3) are configured for each resource set, if the second information indicates that a model set which is associated with PFL0 and PFL1 and associated with resource set 0 is the target model set, it indicates that the target model set is applied to a reference signal(s) received on resource set 0 in each of PFL0 and PFL1. In this case, if the first information indicates that S1 is associated with the target prediction model in the target model set, it indicates that the target prediction model is applied to a reference signal(s) received on S1 in resource set 0 in each of PFL0 and PFL1.
5. If the one or more second configuration information includes one or more PFLs and one or more reference-signal resources, and the one or more third configuration information is one or more reference-signal resource sets, then the second information is used for determining a target model set which is associated with at least one PFL in the one or more PFLs and associated with at least one reference-signal resource in the one or more reference-signal resources. In this case, the first information can be used for determining, from the target model set, a target prediction model associated with at least one reference-signal resource set in the one or more reference-signal resource sets.
   For example, assuming that via the one or more second configuration information and the one or more third configuration information, three PFLs (denoted as PFL0, PFL1, and PFL2) are configured for the reference signal of the terminal device, two resource sets (denoted as resource set 0 and resource set 1) are configured for each PFL, and four resources (denoted as S0, S1, S2, and S3) are configured for each resource set, if the second information indicates that a model set which is associated with PFL0 and PFL1 and associated with S1 is the target model set, it indicates that the target model set is applied to a reference signal(s) received on S1 in each of resource set 0 and resource set 1 in each of PFL0 and PFL1. In this case, if the first information indicates that resource set 0 is associated with the target prediction model in the target model set, it indicates that the target prediction model is applied to a reference signal(s) received on S1 in resource set 0 in each of PFL0 and PFL1.
6. If the one or more second configuration information includes one or more reference-signal resource sets and one or more reference-signal resources, and the one or more third configuration information are one or more PFLs, the second information is used for determining a target model set which is associated with at least one reference-signal resource set in the one or more reference-signal resource sets and associated with at least one reference-signal resource in the one or more reference-signal resources. In this case, the first information can be used for determining, from the target model set, a target prediction model associated with at least one PFL in the one or more PFLs.
   For example, assuming that via the one or more second configuration information and the one or more third configuration information, three PFLs (denoted as PFL0, PFL1, and PFL2) are configured for the reference signal of the terminal device, two resource sets (denoted as resource set 0 and resource set 1) are configured for each PFL, and four resources (denoted as S0, S1, S2, and S3) are configured for each resource set, if the second information indicates that a model set which is associated with resource set 0 and associated with S1 is the target model set, it indicates that the target model set is applied to a reference signal(s) received on S1 in resource set 0 in each of PFL0, PFL1, and PFL2. In this case, if the first information indicates that PFL0 and PFL1 are associated with the target prediction model in the target model set, it indicates that the target prediction model is applied to a reference signal(s) received on S1 in resource set 0 in each of PFL0 and PFL1.
7. If the one or more second configuration information includes one or more PFLs, one or more reference-signal resource sets, and one or more reference-signal resources, the second information is used for determining a target model set which is associated with at least one PFL in the one or more PFLs, associated with at least one reference-signal resource set in the one or more reference-signal resource sets, and associated with at least one reference-signal resource in the one or more reference-signal resources. In this case, the first information can be used for determining the target prediction model from the target prediction model.
   For example, assuming that via the one or more second configuration information and the one or more third configuration information, three PFLs (denoted as PFL0, PFL1, and PFL2) are configured for the reference signal of the terminal device, two resource sets (denoted as resource set 0 and resource set 1) are configured for each PFL, and four resources (denoted as S0, S1, S2, and S3) are configured for each resource set, if the second information indicates that a model set which is associated with PFL0 and PFL1, associated with resource set 0, and associated with S1 is the target model set, it indicates that the target model set can be applied to a reference signal(s) received on S1 in resource set 0 in each of PFL0 and PFL1. In this case, if the first information indicates the target prediction model from the target model set, it indicates that the target prediction model is applied to a reference signal(s) received on S1 in resource set 0 in each of PFL0 and PFL1.

In some embodiments, the second information is used for determining a target model set associated with at least one second TRP.

In other words, when estimating, by the terminal device, the location of the terminal device or the information for determining the location of the terminal device based on the target prediction model, the input of the target prediction model can be information obtained by performing, by the terminal device, measurement on a reference signal sent by the at least one second TRP.

In some embodiments, the second information includes indication information of the at least one second TRP.

Exemplarily, the indication information of the at least one second TRP can include an index or an ID of each second TRP.

Exemplarily, the indication information of the at least one second TRP can include at least one DL reference-signal ID, where the at least one DL reference-signal ID is in one-to-one correspondence with the at least one second TRP. That is, the at least one second TRP can be indicated by the at least one DL reference-signal ID. For example, the DL reference-signal ID can be *dl-PRS-ID,* that is, the at least one DL reference-signal ID can be at least one *dl-PRS-ID.*

In some embodiments, the target prediction model is a prediction model associated with the at least one second TRP.

In other words, the prediction model associated with the at least one second TRP is the same prediction model in the target model set. In other words, the target prediction model indicated by the first information from the target model set is the same prediction model as that associated with the at least one second TRP.

In some embodiments, the target prediction model is a prediction model associated with some second TRPs in the at least one second TRP.

In other words, different second TRPs in the at least one second TRP can be associated with different prediction models in the target model set. In other words, the target prediction model indicated by the first information from the target model set is associated to some TRPs in the at least one second TRP.

In some embodiments, reference-signal configuration information corresponding to the second TRP includes one or more second configuration information, and the first information is used for determining a target prediction model associated with at least one second configuration information in the one or more second configuration information.

Exemplarily, one or more second configuration information corresponding to TRP 1 is used for configuring at least one of the following for a reference signal corresponding to TRP 1: one or more PFLs, one or more reference-signal resource sets, or one or more reference-signal resources. One or more second configuration information corresponding to TRP 2 is used for configuring at least one of the following for a reference signal corresponding to the TRP 2: one or more PFLs, one or more reference-signal resource sets, or one or more reference-signal resources. A model set associated with TRP 1 can be the same as or different from a model set associated with TRP 2. Further, if the model set associated with TRP 1 is the same as the model set associated with TRP 2, TRP 1 and TRP 2 can be associated with the same prediction model in the same model set, or can be associated with different prediction models in the same model set.

For example, TRP 1 and TRP 2 are associated with the target prediction model in the target model set. Based on this, the following describes implementations for determining a target prediction model associated with the configuration information of TRP 1 based on the first information (implementations for determining a target prediction model associated with the configuration information of TRP 2 based on the first information are similar to those of TRP 1). For example, the first information can be implemented as follows.
1. If the one or more second configuration information corresponding to TRP 1 is used for configuring one or more PFLs, the first information is used for determining, from the target model set, a target prediction model associated with at least one PFL in the one or more PFLs.
   For example, assuming that three PFLs (denoted as PFL0, PFL1, and PFL2) are configured for the reference signal corresponding to TRP 1 via the one or more second configuration information corresponding to TRP 1, if the first information indicates a target prediction model associated with PFL0 and PFL1, it indicates that the target prediction model is applied to a reference signal(s) received from TRP 1 on each of PFL0 and PFL1.
2. If the one or more second configuration information corresponding to TRP 1 is used for configuring one or more reference-signal resource sets, the first information is used for determining a target prediction model associated with at least one reference-signal resource set in the one or more reference-signal resource sets.
   For example, assuming that via the one or more second configuration information corresponding to TRP 1, three PFLs (denoted as PFL 0, PFL 1, and PFL 2) are configured for the reference signal corresponding to TRP 1, and two resource sets (denoted as resource set 0 and resource set 1) are configured for each PFL, if the first information indicates a target prediction model associated with the resource set 0, it indicates the target prediction model is applied to a reference signal(s) received from TRP 1 on resource set 0 in each of PFL0, PFL 1, and PFL2.
3. If the one or more second configuration information corresponding to TRP 1 is used for configuring one or more reference-signal resources, the first information is used for determining a target prediction model associated with at least one reference-signal resource in the one or more reference-signal resources.
   For example, assuming that via the one or more second configuration information corresponding to TRP 1, three PFLs (denoted as PFL0, PFL1, and PFL2) are configured for the reference signal corresponding to TRP 1, two resource sets (denoted as resource set 0 and resource set 1) are configured for each PFL, and four resources (denoted as S0, S1, S2, and S3) are configured for each resource set, if the first information indicates a target prediction model associated with S1, it indicates that the target prediction model can be applied to a reference signal(s) received from TRP 1 on S1 in each of PFL0, PFL1, and PFL2.
4. If the one or more second configuration information corresponding to TRP 1 is used for configuring one or more PFLs and one or more reference-signal resource sets, the first information is used for determining a target prediction model which is associated with at least one PFL in the one or more PFLs and associated with at least one reference-signal resource set in the one or more reference-signal resource sets.
   For example, assuming that via the one or more second configuration information corresponding to TRP 1, three PFLs (denoted as PFL 0, PFL 1, and PFL 2) are configured for the reference signal corresponding to TRP 1, and two resource sets (denoted as resource set 0 and resource set 1) are configured for each PFL, if the first information indicates a target prediction model which is associated with PFL0 and PFL1 and associated with resource set 0, it indicates that the target prediction model is applied to a reference signal(s) received from TRP 1 on resource set 0 in each of PFL0 and PFL1.
5. If the one or more second configuration information corresponding to TRP 1 is used for configuring one or more PFLs and one or more reference-signal resources, the first information is used for determining a target prediction model which is associated with at least one PFL in the one or more PFLs and associated with at least one reference-signal resource in the one or more reference-signal resources.
   For example, assuming that via the one or more second configuration information corresponding to TRP 1, three PFLs (denoted as PFL0, PFL1, and PFL2) are configured for the reference signal corresponding to TRP 1, two resource sets (denoted as resource set 0 and resource set 1) are configured for each PFL, and four resources (denoted as S0, S1, S2, and S3) are configured for each resource set, if the first information indicates a target prediction model which is associated with PFL0 and PFL1 and associated with S1, it indicates that the target prediction model can be applied to a reference signal(s) received from TRP 1 on S1 in each of PFL0 and PFL1.
6. If the one or more second configuration information corresponding to TRP 1 is used for configuring one or more reference-signal resource sets and one or more reference-signal resources, the first information is used for determining a target prediction model which is associated with at least one reference-signal resource set in the one or more reference-signal resource sets and associated with at least one reference-signal resource in the one or more reference-signal resources.
   For example, assuming that via the one or more second configuration information corresponding to TRP 1, three PFLs (denoted as PFL0, PFL1, and PFL2) are configured for the reference signal corresponding to TRP 1, two resource sets (denoted as resource set 0 and resource set 1) are configured for each PFL, and four resources (denoted as S0, S1, S2, and S3) are configured for each resource set, if the first information indicates a target prediction model which is associated with resource set 0 and associated with S1, it indicates that the target prediction model can be applied to a reference signal(s) received from TRP 1 on S1 in resource set 0 in each of PFL0, PFL1, and PFL2.
7. If the one or more second configuration information corresponding to TRP 1 is used for configuring one or more PFLs, one or more reference-signal resource sets, and one or more reference-signal resources, then the first information is used for determining a target prediction model which is associated with at least one PFL in the one or more PFLs, associated with at least one reference-signal resource set in the one or more reference-signal resource sets, and associated with at least one reference-signal resource in the one or more reference-signal resources.
   For example, assuming that via the one or more second configuration information corresponding to TRP 1, three PFLs (denoted as PFL0, PFL1, and PFL2) are configured for the reference signal corresponding to TRP 1, two resource sets (denoted as resource set 0 and resource set 1) are configured for each PFL, and four resources (denoted as S0, S1, S2, and S3) are configured for each resource set, if the first information indicates a target prediction model which is associated with PFL0 and PFL1, associated with resource set 0, and associated with S1, then it indicates that the target prediction model can be applied to a reference signal(s) received from TRP 1 on S1 in resource set 0 in each of PFL0 and PFL1.

Exemplarily, the number of second TRPs associated with the target prediction model is greater than or equal to the number of input signals of the target prediction model during training of the target prediction model. For example, if the second information is used for determining a target model set associated with at least one second TRP, the number of second TRPs associated with the target prediction model is greater than or equal to the number of input signals of the target prediction model during training of the target prediction model.

It should be noted that, in the foregoing embodiments, the target model set is associated with a TRP(s), and the target prediction model is associated with at least one of a PFL(s), a resource set(s), or a resource(s), but the disclosure is not limited thereto.

For example, in other alternative embodiments, the reference-signal configuration information corresponding to the second TRP includes one or more second configuration information and one or more fourth configuration information, where the second information is used for determining a target model set associated with at least one fourth configuration information in the one or more fourth configuration information, the first information is used for determining, from the target model set, a target prediction model associated with at least one second configuration information in the one or more second configuration information. For example, the second information includes indication information of the at least one fourth configuration information, and the first information includes indication information of the at least one second configuration information.

Exemplarily, the one or more fourth configuration information is used for configuring one or more PFLs, one or more reference-signal resource sets, and one or more reference-signal resources.

Exemplarily, the one or more second configuration information is different from the one or more fourth configuration information in terms of information type. For example, the one or more second configuration information can include one or more of: one or more PFLs, one or more reference-signal resource sets, and one or more reference-signal resources. The one or more fourth configuration information can include configuration information among the one or more PFLs, the one or more reference-signal resource sets, and the one or more reference-signal resources other than the one or more second configuration information.

For example, TRP 1 and TRP 2 are associated with the target prediction model in the target model set. Based on this, the following describes implementations for determining a target prediction model associated with the configuration information of TRP 1 based on the first information (implementations for determining a target prediction model associated with the configuration information of TRP 2 based on the first information is similar to those of TRP 1). For example, the first information can be implemented as follows.
1. If the one or more fourth configuration information is one or more PFLs, and the one or more second configuration information includes one or more reference-signal resource sets and/or one or more reference-signal resources, then the second information is used for determining a target model set associated with at least one PFL in the the one or more PFLs. In this case, the first information is used for determining, from the target model set, a target prediction model associated with at least one reference-signal resource set in the one or more reference-signal resource sets; and/or the first information can be used for determining, from the target model set, a target prediction model associated with at least one reference-signal resource in the one or more reference-signal resources.
   For example, assuming that via the one or more fourth configuration information and the second configuration information, three PFLs (denoted as PFL0, PFL1, and PFL2) are configured for the reference signal corresponding to TRP 1, two resource sets (denoted as resource set 0 and resource set 1) are configured for each PFL, and four resources (denoted as S0, S1, S2, and S3) are configured for each resource set, if the second information indicates that a model set associated with PFL0 and PFL1 is the target model set, it indicates that the target model set is applied to a reference signal(s) on each of PFL0 and PFL1. In this case, if the first information indicates that resource set 0 is associated with the target prediction model in the target model set, it indicates that the target prediction model is applied to a reference signal(s) received on resource set 0 in each of PFL0 and PFL1. Likewise, if the first information indicates that S1 is associated with the target prediction model in the target model set, it indicates that the target prediction model is applied to a reference signal(s) received on S1 in each of resource set 0 and resource set 1 in each of PFL0 and PFL1. Further, if the first information indicates that resource set 0 and S1 are associated with the target prediction model in the target model set, it indicates that the target prediction model is applied to a reference signal(s) received on S1 in resource set 0 in each of PFL0 and PFL1.
2. If the one or more fourth configuration information is one or more reference-signal resource sets, and the one or more second configuration information includes one or more PFLs and/or one or more reference-signal resources, then the second information is used for determining a target model set associated with at least one reference-signal resource set in the one or more reference-signal resource sets. In this case, the first information is used for determining a target prediction model associated with at least one PFL in the one or more PFLs; and/or the first information can be used for determining, from the target model set, a target prediction model associated with at least one reference-signal resource in the one or more reference-signal resources.
   For example, assuming that via the one or more fourth configuration information and the second configuration information, three PFLs (denoted as PFL0, PFL1, and PFL2) are configured for the reference signal corresponding to TRP 1, two resource sets (denoted as resource set 0 and resource set 1) are configured for each PFL, and four resources (denoted as S0, S1, S2, and S3) are configured for each resource set, if the second information indicates that a model set associated with resource set 0 is the target model set, it indicates that the target model set is applied to a reference signal(s) received on resource set 0 in each of PFL0, PFL1, and PFL2. In this case, if the first information indicates that PFL0 and PFL1 are associated with the target prediction model in the target model set, it indicates that the target prediction model is applied to a reference signal(s) received on resource set 0 in each of PFL0 and PFL1. Likewise, if the first information indicates that S1 is associated with the target prediction model in the target model set, it indicates that the target prediction model is applied to a reference signal(s) received on S1 in resource set 0 in each of PFL0, PFL1, and PFL2. Further, if the first information indicates that PFL0, PFL1, and S1 are associated with the target prediction model in the target model set, it indicates that the target prediction model is applied to a reference signal(s) received on S1 in resource set 0 in each of PFL0 and PFL1.
3. If the one or more fourth configuration information is one or more reference-signal resources, and the one or more second configuration information includes one or more PFLs and/or one or more reference-signal resource sets, then the second information is used for determining a target model set associated with at least one reference-signal resource in the one or more reference-signal resources. In this case, the first information is used for determining a target prediction model associated with at least one reference-signal resource set in the one or more reference-signal resource sets; and/or the first information can be used for determining, from the target model set, a target prediction model associated with at least one PFL in the one or more PFLs.
   For example, assuming that via the one or more fourth configuration information and the second configuration information, three PFLs (denoted as PFL0, PFL1, and PFL2) are configured for the reference signal corresponding to TRP 1, two resource sets (denoted as resource set 0 and resource set 1) are configured for each PFL, and four resources (denoted as S0, S1, S2, and S3) are configured for each resource set, if the second information indicates that a model set associated with S1 is the target model set, it indicates that the target model set is applied to a reference signal(s) received on S1 in each of resource set 0 and resource set 1 in each of PFL0, PFL1, and PFL2. In this case, if the first information indicates that resource set 0 is associated with the target prediction model in the target model set, it indicates that the target prediction model is applied to a reference signal(s) received on S1 in resource set 0 in each of PFL0, PFL1, and PFL2. Likewise, if the first information indicates that PFL0 and PFL1 are associated with the target prediction model in the target model set, it indicates that the target prediction model is applied to a reference signal(s) received on S1 in each of resource set 0 and resource set 1 in each of PFL0 and PFL1. Further, if the first information indicates that resource set 0, PFL0, and PFL1 are associated with the target prediction model in the target model set, it indicates that a target prediction model is applied to a reference signal(s) received on S1 in resource set 0 in each of PFL0 and PFL1.
4. If the one or more fourth configuration information includes one or more PFLs and one or more reference-signal resource sets, and the one or more second configuration information is one or more reference-signal resources, then the second information is used for determining a target model set which is associated with at least one PFL in the one or more PFLs and associated with at least one reference-signal resource set in the one or more reference-signal resource sets. In this case, the first information can be used for determining, from the target model set, a target prediction model associated with at least one reference-signal resource in the one or more reference-signal resources.
   For example, assuming that via the one or more fourth configuration information and the second configuration information, three PFLs (denoted as PFL0, PFL1, and PFL2) are configured for the reference signal corresponding to TRP 1, two resource sets (denoted as resource set 0 and resource set 1) are configured for each PFL, and four resources (denoted as S0, S1, S2, and S3) are configured for each resource set, if the second information indicates that a model set which is associated with PFL0 and PFL1 and associated with resource set 0 is the target model set, it indicates that the target model set is applied to a reference signal(s) received on resource set 0 in each of PFL0 and PFL1. In this case, if the first information indicates that S1 is associated with the target prediction model in the target model set, it indicates that the target prediction model is applied to a reference signal(s) received on S1 in resource set 0 in each of PFL0 and PFL1.
5. If the one or more fourth configuration information includes one or more PFLs and one or more reference-signal resources, and the one or more second configuration information is one or more reference-signal resource sets, then the second information is used for determining a target model set which is associated with at least one PFL in the one or more PFLs and associated with at least one reference-signal resource in the one or more reference-signal resources. In this case, the first information can be used for determining, from the target model set, a target prediction model associated with at least one reference-signal resource set in the one or more reference-signal resource sets.
   For example, assuming that via the one or more fourth configuration information and the second configuration information, three PFLs (denoted as PFL0, PFL1, and PFL2) are configured for the reference signal corresponding to TRP 1, two resource sets (denoted as resource set 0 and resource set 1) are configured for each PFL, and four resources (denoted as S0, S1, S2, and S3) are configured for each resource set, if the second information indicates that a model set which is associated with PFL0 and PFL1 and associated with S1 is the target model set, it indicates that the target model set is applied to a reference signal(s) received on S1 in each of resource set 0 and resource set 1 in each of PFL0 and PFL1. In this case, if the first information indicates that resource set 0 is associated with the target prediction model in the target model set, it indicates that the target prediction model is applied to a reference signal(s) received on S1 in resource set 0 in each of PFL0 and PFL1.
6. If the one or more fourth configuration information includes one or more reference-signal resource sets and one or more reference-signal resources, and the one or more second configuration information are one or more PFLs, then the second information is used for determining a target model set which is associated with at least one reference-signal resource set in the one or more reference-signal resource sets and associated with at least one reference-signal resource in the one or more reference-signal resources. In this case, the first information can be used for determining, from the target model set, a target prediction model associated with at least one PFL in the one or more PFLs.
   For example, assuming that via the one or more fourth configuration information and the second configuration information, three PFLs (denoted as PFL0, PFL1, and PFL2) are configured for the reference signal corresponding to TRP 1, two resource sets (denoted as resource set 0 and resource set 1) are configured for each PFL, and four resources (denoted as S0, S1, S2, and S3) are configured for each resource set, if the second information indicates that a model set which is associated with resource set 0 and associated with S1 is the target model set, it indicates that the target model set is applied to a reference signal(s) received on S1 in resource set 0 in each of PFL0, PFL1, and PFL2. In this case, if the first information indicates that PFL0 and PFL1 are associated with the target prediction model in the target model set, it indicates that the target prediction model is applied to a reference signal(s) received on S1 in resource set 0 in each of PFL0 and PFL1.
7. If the one or more fourth configuration information includes one or more PFLs, one or more reference-signal resource sets, and one or more reference-signal resources, then the second information is used for determining a target model set which is associated with at least one PFL in the one or more PFLs, associated with at least one reference-signal resource set in the one or more reference-signal resource sets, and associated with at least one reference-signal resource in the one or more reference-signal resources. In this case, the first information can be used for determining the target prediction model from the target prediction model.
   For example, assuming that via the one or more fourth configuration information and the second configuration information, three PFLs (denoted as PFL0, PFL1, and PFL2) are configured for the reference signal corresponding to TRP 1, two resource sets (denoted as resource set 0 and resource set 1) are configured for each PFL, and four resources (denoted as S0, S1, S2, and S3) are configured for each resource set, if the second information indicates that a model set which is associated with PFL0 and PFL1, associated with resource set 0, and associated with S1 is the target model set, then it indicates that the target model set can be applied to a reference signal(s) received on S1 in resource set 0 in each of PFL0 and PFL1. In this case, if the first information indicates the target prediction model from the target model set, it indicates that the target prediction model is applied to a reference signal(s) received on S1 in resource set 0 in each of PFL0 and PFL1.

In some embodiments, a protocol applied to the second information is an LTE positioning protocol (LPP), or the second information is configured via radio resource control (RRC) signaling.

In embodiments, if the protocol applied to the second information is the LPP, an existing protocol and procedure can be reused, which is conducive to reducing workload of standardization. If the second information is configured via RRC signaling, transmission delay can be reduced.

In some embodiments, a protocol applied to the first information is an LPP, or the first information is configured via RRC signaling.

In embodiments, if the protocol applied to the first information is the LPP, an existing protocol and procedure can be reused, which is conducive to reducing workload of standardization. If the first information is configured via RRC signaling, transmission delay can be reduced.

In some embodiments, the method 210 can further include performing at least one of: selecting the target prediction model, activating the target prediction model, deactivating the target prediction model, switching a model in use to the target prediction model, or rolling the model in use back to the target prediction model.

In some embodiments, the location of the terminal device is estimated based on the target prediction model, to obtain a location estimation result of the terminal device.

In some embodiments, the information for determining the location of the terminal device is estimated based on the target prediction model, to obtain an intermediate estimation result for determining the location of the terminal device. The intermediate estimation result is sent to the network device.

In some embodiments, the intermediate estimation result includes at least one of: a time of arrival (TOA), a reference signal time difference (RSTD), a downlink time difference of arrival (DL-TDOA), a reference signal received power (RSRP), or indication information that a channel model of the terminal device is line-of-sight (LOS) or non-LOS (NLOS).

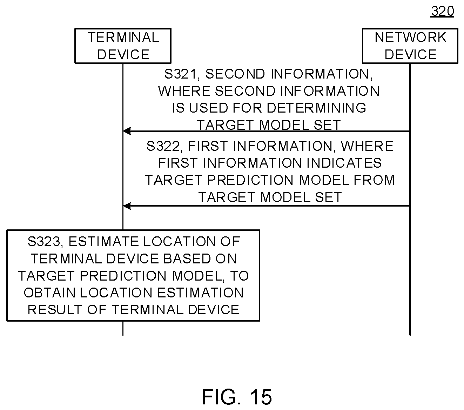

FIG. 15 is a schematic flowchart of a direct-positioning-based location estimation method 320 provided in embodiments of the disclosure.

As illustrated in FIG. 14, the location estimation method 310 can include the following.
S321, a terminal device receives second information sent by a network device, where the second information is used for determining a target model set.
S322, the terminal device receives first information sent by the network device, where the first information indicates a target prediction model from the target model set.
S323, the terminal device estimates a location of the terminal device based on the target prediction model, to obtain a location estimation result of the terminal device.

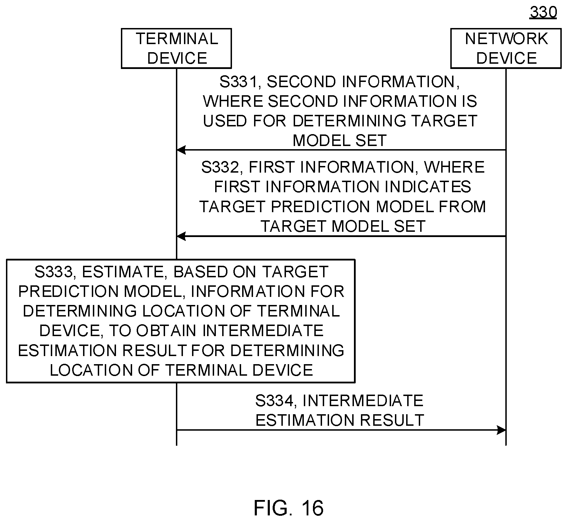

FIG. 16 is a schematic flowchart of an assisted-positioning-based location estimation method 330 provided in embodiments of the disclosure.
S331, a terminal device receives second information sent by a network device, where the second information is used for determining a target model set.
S332, the terminal device receives first information sent by the network device, where the first information indicates a target prediction model from the target model set.
S333, the terminal device estimates, based on the target prediction model, information for determining a location of the terminal device, to obtain an intermediate estimation result for determining the location of the terminal device.
S334, the terminal device sends the intermediate estimation result to the network device.

The location estimation method of the disclosure will be described below with reference to embodiments.

### Embodiment 1:

In this embodiment, the network device sends the first information to the terminal device. After receiving the first information, the terminal device can determine the target prediction model based on the first information, and then estimate, based on the target prediction model, the location of the terminal device or the information for determining the location of the terminal device, so as to obtain the estimation result. Specifically, the first information is used for determining a target prediction model associated with configuration information of a PRS. In this embodiment, instead of using a traditional algorithm to estimate the location of the terminal device, the terminal device estimates, based on the target prediction model, the location of the terminal device or the information for determining the location of the terminal device, so as to obtain the estimation result. As such, it is possible to not only reduce estimation cost of location estimation, but also facilitate improving accuracy of location estimation.

Step 1, the terminal device receives the first information sent by the network device, where the first information is used for determining the target prediction model, and the target prediction model is used for positioning the terminal device or estimating the location of the terminal device.

Optionally, the first information indicates a model index, a model format, or a model configuration of the target prediction model.

Optionally, the first information includes configuration information of a reference signal, and the configuration information of the reference signal is associated with the target prediction model. Optionally, the reference signal is an SSB, a PRS, or a CSI-RS.

Optionally, the first information is transmitted via LPP, which is conducive to reducing workload of standardization. Optionally, the network device is a location server.

Optionally, the first information is configured via RRC signaling, which can reduce transmission delay. Optionally, the network device is a base station.

Optionally, at least one of the following procedures is performed at a terminal-device side: model selection, model activation, model deactivation, model switching, or model rollback.

Step 2, the terminal device performs estimation related to the location of the terminal device based on the target prediction model that is determined according to the first information.

If the reference signal is a PRS, the first information is configuration information of the PRS, and the terminal device can determine the target prediction model according to the configuration information of the PRS.

Specifically, there can be the following implementations.
a). The first information indicates a target prediction model associated with one or more TRPs, which can mean that the first information indicates a target prediction model associated with a PRS configuration(s) for one or more TRPs, or can mean that a prediction model(s) associated with the PRS configuration for the one or more TRPs indicated by the first information is the same. For example, the one or more TRPs can be indicated by indicating one or more *dl-PRS-ID,* where each *dl-PRS-ID* corresponds to one TRP. In one or more procedures of model selection, model activation, model deactivation, model switching, and model rollback, the number of TRPs in the one or more TRPs indicated by the first information is greater than or equal to the number of TRPs during training of an artificial intelligence (Al) model.

Exemplarily, the first information can include an index, a format, or a configuration of the target prediction model.

Exemplarily, the first information can include a SEQUENCE data structure for indication. Optionally, the maximum size of the SEQUENCE data structure can be any positive integer, for example, the size can be 18, 3, or 1. In embodiments of the disclosure, the maximum size of the SEQUENCE data structure is denoted as *maxSize,* and each element type in the SEQUENCE data structure is denoted as *trpInfo.* Optionally, each element *trpInfo* indicates one TRP, and the value thereof can be 0 ~ 255, or 0 ~ 63, or 1 ~ 64. The above information is expressed in a corresponding new field as follows (the specific names used herein are only for illustrative purpose, and can also be other names). For example, the size of *TRPINFO* is 18, each element *trpInfo* corresponds to one TRP, and then 18 *trpInfo* indicate PRS configurations corresponding to 18 TRPs, but correspond to only one prediction model *AIModel,* that is, the target prediction model. The data type of *AIModel* can be INTEGER, and S1 corresponds to the index of the target prediction model. Alternatively, the data type of *AIModel* is SEQUENCE, and the SEQUENCE data structure includes one or more configurations of the target prediction model.

```
          AIModelInfo ::= SEQUENCE{
          TRPINFO SEQUENCE (SIZE (1..maxSize)) OF trplnfo, OPTIONAL
          AlModel data type S1;
          }.
```

In this embodiment, the first information indicates a target prediction model associated with all reference-signal configurations configured for one or more TRPs. After receiving the first information, the terminal device knows that the target prediction model is applied to all the indicated TRPs to perform location-related estimation. Since environment variables of these TRPs may be similar, by applying the same target prediction model, it is possible to reduce complexity at the terminal-device side.

b). The first information indicates a target prediction model(s) associated with a PRS configuration(s) corresponding to a specific PFL(s) for one or more TRPs, which can mean that the first information indicates that the target prediction model associated with the PRS configuration corresponding to the specific PFL for the one or more TRPs is the same. For example, the one or more TRPs can be indicated by indicating one or more *dl-PRS-ID,* where each *dl-PRS-ID* corresponds to one TRP. In one or more procedures of model selection, model activation, model deactivation, model switching, and model rollback, the number of TRPs in the one or more TRPs indicated by the first information is greater than or equal to the number of TRPs during training of the Al model.

Exemplarily, the one or more TRPs are implemented as one TRP, and it is assumed that the one TRP (denoted as TRP *a*) is configured with three PFLs (denoted as PFL 0, PFL 1, and PFL 2). Optionally, if the first information indicates TRP a, and indicates that a corresponding PFL that the same Al model is applied to is PFL0 and PFL1 , it indicates that the same Al model can be applied to a PRS on each of PFL0 and PFL1 for TRP *a,* but is not applied to a PRS on PFL2. That is, *trpInfo* in the new field needs to include both TRP indication information and PFL indication information.

Exemplarily, the one or more TRPs are implemented as two TRPs, and each TRP can correspond to one *trpInfo.* Each TRP is configured with a PFL(s). If TRP *a* is configured with three PFLs (denoted as PFL0, PFL1, and PFL2), TRP *b* is configured with two PFLs (denoted as PFL4 and PFL5), and the first information indicates TRP *a* and TRP b and indicates that a corresponding PFL that the same Al model is applied to is PFL0, PFL1, and PFL4, then it indicates that the same Al model can be applied to a PRS on each of PFL0 and PFL1 for TRP a and a PRS on PFL4 for TRP *b,* where the Al model is an associated Al model, but the Al model is not applied to a PRS on a PFL which is not indicated. That is, *trpInfo* in the new field needs to include both TRP indication information and PFL indication information.

In this embodiment, multiple PFLs can be configured for one or more TRPs. A frequency-domain spacing between two PFLs may be relatively large, and the environment may change greatly. By configuring different target prediction models according to actual scenarios, it is possible to improve positioning accuracy.

c). The first information indicates a target prediction model(s) associated with a PRS configuration(s) of a specific PRS resource set(s) for one or more TRPs, which can mean that the first information indicates that the target prediction model associated with the specific PRS resource set for the one or more TRPs is the same. For example, the one or more TRPs can be indicated by indicating one or more *dl-PRS-ID,* where each *dl-PRS-ID* corresponds to one TRP. In one or more procedures of model selection, model activation, model deactivation, model switching, and model rollback of the target prediction model, the number of TRPs in the one or more TRPs indicated by the first information is greater than or equal to the number of TRPs during training of the Al model.

Exemplarily, in addition to indicating one or more TRPs, the first information further indicates which PRS resource set(s) can apply the same prediction model as the associated target prediction model. Assuming that the first information indicates one TRP (denoted as TRP a), three PFLs (denoted as PFL 0, PFL 1, and PFL 2) are configured, and two resource sets (denoted as set 0 and set 1) are configured for each PFL, then there can be the following possible schemes.
1. If the first information indicates TRP a and indicates that the resource set is set 0, it indicates that the same target prediction model is applied to a PRS(s) on resource set 0 in each of PFL 0, PFL 1, and PFL 2 for TRP a.
2. c) can be combined with b), that is, if the first information indicates TRP a, and indicates that a corresponding PFL is PFL0 and PFL1, and a corresponding resource set is set 0, then it indicates that target prediction models corresponding to PRSs on resource set 0 in PFL0 and PFL1 for TRP a are the same, where the target prediction model is the associated target prediction model.

In this embodiment, it is possible to realize finer indication of the target prediction model. For example, for two resource sets, one of the two resource sets corresponds to wide analog beams, while the other one of the two resource sets corresponds to narrow analog beams, or the two resource sets differ greatly in terms of transmission period or repetition factor. In this case, if target prediction models corresponding to the two resource sets are different, adaptability of the model can be improved, which can apply the target prediction model more flexibly for positioning, and thus facilitates more accurate positioning.

d). The first information indicates a target prediction model(s) corresponding to a specific PRS resource(s) for one or more TRPs, which can mean that the target prediction model associated with the specific PRS resource for the one or more TRPs indicated by the first information is the same. For example, the one or more TRPs can be indicated by indicating one or more *dl-PRS-ID,* where each *dl-PRS-ID* corresponds to one TRP. In one or more procedures of model selection, model activation, model deactivation, model switching, and model rollback, the number of TRPs in the one or more TRPs indicated by the first information is greater than or equal to the number of TRPs during training of the Al model.

Exemplarily, the first information indicates one or more TRPs, and also indicates which PRS resource(s) for each TRP can apply the same target prediction model. Assuming that three PFLs (denoted as PFL0, PFL1, and PFL2) are configured for one TRP (denoted as TRP a), two resource sets (denoted as set 0 and set 1) are configured for each PFL, and four PRS resources (denoted as S0, S1, S2, and S3) are configured for each resource set, then there can be the following possible schemes.
1. If the first information indicates TRP *a,* and indicates that a corresponding PRS resource that the associated target prediction model is applied to is S1, it indicates that the associated target prediction model is applied to a signal(s) on S1 in each of PFL 0, PFL 1, and PFL 2 for TRP *a,* but is not applied to other PRS resources in the three PFLs.
2. In combination with b), that is, if the first information indicates TRP *a,* and indicates that the specific PFL is PFL0 and PFL1 and the specific PRS resource is S1, then it indicates that the associated target prediction model is applied to a signal on S1 in each of PFL0 and PFL1 for TRP a, but is not applied to other PRSs.
3. In combination with b) and c), that is, if the first information indicates TRP *a,* and indicates that the specific PFL is PFL0 and PFL1, the specific PRS resource set is set 0, and the specific PRS resource is S1, then it indicates that the associated target prediction model is applied to a signal(s) on S1 in resource set 0 in each of PFL0 and PFL1 for TRP *a,* but is not applied to other PRSs.
4. In combination with c), that is, if the first information indicates TRP a, and indicates that the specific PRS resource set is set 0 and the specific PRS resource is S1, then it indicates that the associated target prediction model is applied to a signal(s) on S1 in resource set 0 in each of PFL0, PFL1, and PFL2 for TRP *a,* but is not applied to other PRSs.

In this embodiment, it is possible to realize finer indication of the target prediction model. For example, two resources correspond to different sequences or quasi co-location (QCL) information. In this case, if target prediction models corresponding to the two resources are different, it is possible to improve adaptability of the model, which can apply the target prediction model more flexibly for positioning, and thus facilitates more accurate positioning.

As can be seen, a possible RRC structure of *trpInfo* is as follows, and a field denoted as "OPTIONAL" in the data structure is an optional field. The TRP indication information corresponds to a TRP index. A PFL indication information field, PRS resource set indication information, and PRS resource indication information are all optional fields, and if the field is present, the associated target prediction model is applied to the content corresponding to the field.

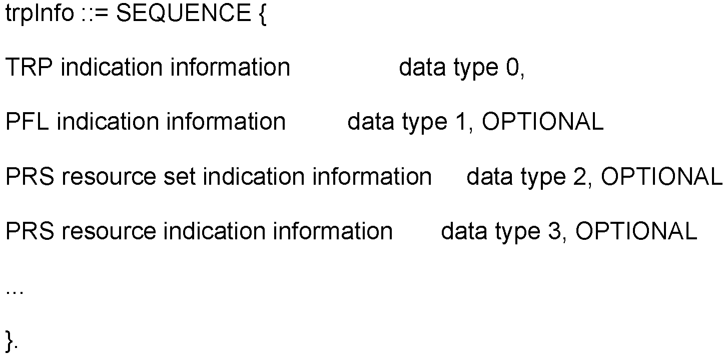

Exemplarily, *AIModelI*nfo and *trpInfo* can be transmitted in an NR positioning information element *NR-Multi-RTT-ProvideAssistanceData, NR-DL-AoD-ProvideAssistanceData, NR-DL-TDOA-ProvideAssistanceData, NR-DL-PRS-AssistanceData,* or *NR-SelectedDL-PRS-IndexList,* or can be configured independently as a new field.

In this embodiment, the terminal device can select a suitable target prediction model, which can improve accuracy of positioning.

It should be noted that, in this embodiment, for step 2, the terminal device performs estimation related to the location of the terminal device based on the target prediction model that is determined according to the first information as follows. The terminal device estimates the location of the terminal device based on the target prediction model that is determined according to first information. Alternatively, the terminal device estimates an intermediate result related to the location of the terminal device based on the target prediction model that is determined according to the first information, where the intermediate result related to the location of the terminal device includes one or more of: a TOA, an RSTD, a DL-TDOA, an RSRP, and an LOS/NLOS identification.

### Embodiment 2:

In this embodiment, the network device sends the second information and the first information to the terminal device. After receiving the second information and the first information, the terminal device can determine the target model set based on the second information, and determine the target prediction model from the target model set based on the first information, and then estimate, based on the target prediction model, the location of the terminal device or the information for determining the location of the terminal device, to obtain the estimation result. Specifically, the first information is used for determining a target prediction model associated with a PRS configuration information. In this embodiment, instead of using a traditional algorithm to estimate the location of the terminal device, the terminal device estimates, based on the target prediction model, the location of the terminal device or the information for determining the location of the terminal device, so as to obtain the estimation result. As such, it is possible to not only reduce estimation cost of location estimation, but also facilitate improving accuracy of location estimation. In addition, the second information is used for determining the target model set, which is beneficial for the network device to indicate the target prediction model from different model sets and thus beneficial to improving flexibility of the target prediction model.

In other words, in Embodiment 2, a step can be added on the basis of step 1 and step 2 in Embodiment 1, i. e. the terminal device receives the second information sent by the network device, where the second information is used for determining the target model set. The target prediction model determined by the terminal device according to the first information belongs to the target model set. The first information and the second information can be two different higher-layer signaling or can be different fields in the same higher-layer signaling.

Specifically, there can be the following implementations.
a). The second information indicates information of a target model set associated with one or more TRPs, which can mean that the second information indicates a target prediction model set associated with a PRS configuration(s) for one or more TRPs, or can mean that the target prediction model set associated with the PRS configuration for the one or more TRPs indicated by the second information is the same.

Exemplarily, the information of the target prediction model set includes an index of the target prediction model set, or a format of the target prediction model set, or a configuration of the target prediction model set.

Exemplarily, the second information can include a SEQUENCE data structure for indication. Optionally, the maximum size of the SEQUENCE data structure can be any positive integer, for example, the size can be 18, 3, or 1. The maximum size of the SEQUENCE data structure is denoted as *maxSize,* and each element type in the SEQUENCE data structure is denoted as *trpInfo.* Optionally, each element *trpInfo* indicates information of one TRP, and the value thereof can be 0 ~ 255, or 0 ~ 63, or 1 ~ 64. The above information can be expressed in a corresponding new field as follows (the specific names used herein are only for illustrative purpose, and can also be other names). For example, the size of *TRPINFO* is 18, each element *trpInfo* corresponds to one TRP, and then 18 *trpInfo* indicate PRS configurations corresponding to 18 TRPs, but correspond to only one target prediction model set (denoted as *AIModelSet*)*.* The data type of *AIModelSet* can be INTEGER, and S1 corresponds to an index of the target prediction model. Alternatively, the data type of *AIModelSet* can be SEQUENCE, and the SEQUENCE data structure includes one or more configurations of the target prediction model. Each target prediction model set includes k trained target prediction models, and is stored at the terminal-device side and/or the network-device side. The data type of *AIModel* can be INTEGER, and S1 corresponds to the index of the target prediction model. Alternatively, the data type of *AIModel* is SEQUENCE, and the SEQUENCE data structure includes one or more configurations of the target prediction model.

```
          AIModelInfo ::= SEQUENCE{
          TRPINFO SEQUENCE (SIZE (1..maxSize)) OF trplnfo, OPTIONAL
          AlModelSet data type S1;
          }.
```

In this embodiment, by indicating both the target prediction model set and the target prediction model, the target prediction model stored at the terminal side can be diversified, and can be adapted to more environments and scenarios.

Further, the terminal device can determine the target prediction model from the target model set based on the first information received, for example, the first information indicates the target prediction model.

Exemplarily, there can be the following implementations.
1. The first information indicates a target prediction model associated with one or more TRPs, which can mean that the same target prediction model in the same target prediction model set is applied to all PRS configurations for the one or more TRPs. The example thereof is as follows:

```
          AIModelInfo ::= SEQUENCE{
          TRPINFO SEQUENCE (SIZE (1..maxSize)) OF trplnfo, OPTIONAL
          AlModelSet data type S1;
          AIModel data type S1;
          }.
```

In this embodiment, the first information indicates a target prediction model associated with all reference-signal configurations configured for the one or more TRPs. After receiving the first information, the UE knows that the target prediction model is applied to all the indicated TRPs for location-related estimation. Since environment variables of these TRPs may be similar, by applying the same target prediction model, it is possible to reduce complexity at the terminal-device side.

2. In addition to the one or more TRPs indicated by the second information, the first information further indicates target prediction models corresponding to different TRPs in the one or more TRPs, where the target prediction models belong to the target prediction model set indicated by the second information.

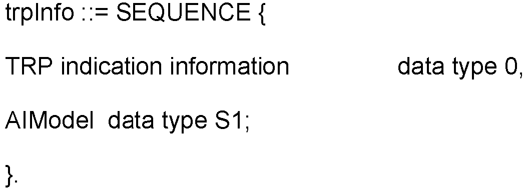

In this embodiment, if two TRPs are configured via the second information, the first information indicates target prediction models associated with reference-signal configurations configured for the two TRPs, for example, TRP a can be associated with model 1, and TRP b can be associated with model 2. Although environment variables of these TRPs may be similar, some fine adjustments need to be made to the Al model, to indicate respectively the target prediction models with more degrees of freedom, and can be better adapted to different scenarios.

3. In addition to the one or more TRPs indicated by the second information, the first information indicates a target prediction model applied to all PRS configurations for a PFL(s) and/or a PRS resource set(s) and/or a PRS resource(s) for the one or more TRPs.
3.1. The first information indicates PFL information. It is assumed that three PFLs (denoted as PFL0, PFL1, and PFL2) are configured for one TRP (denoted as TRP *a*). Optionally, if the first information indicates TRP *a,* and PFLs corresponding to TRP a that the same Al model is applied to are PFL0 and PFL1, it indicates that the associated Al model can be applied to a PRS(s) on each of PFL0 and PFL1 for TRP *a.*
3.2. The first information indicates information of a PRS resource set. There are two possible manners. In a first manner, if the first information indicates TRP a and indicates that the resource set is set 0, it indicates that the same target prediction model is applied to a PRS(s) on resource set 0 in each of PFL0, PFL1, and PFL2 for TRP *a.* In a second manner, in combination with 3.1, if the first information indicates TRP *a,* and indicates that a corresponding PFL is PFL0 and PFL1 and a corresponding resource set is set 0, then it indicates that the associated target prediction model is applied to a PRS(s) on resource set 0 in each of PFL0 and PFL1 for TRP a.
3.3. The first information indicates information of a PRS resource. There are three possible manners. In a first manner, if the first information indicates TRP *a,* and indicates that a corresponding PRS resource that the associated target prediction model is applied to is S1, then it indicates that the associated target prediction model is applied to a signal(s) on S1 in each of PFL0, PFL1, and PFL2 for TRP *a,* but is not applied to other PRS resources in the three PFLs. In a second manner, in combination with 3.1, if the first information indicates TRP *a,* and indicates that the specific PFL is PFL0 and PFL1 and the specific PRS resource is S1, then it indicates that the associated target prediction model is applied to a signal(s) on S1 in each of PFL0 and PFL1 for TRP *a,* but is not applied to other PRSs. In a third manner, in combination with 3.2, if the first information indicates TRP *a,* and indicates that the specific PRS resource set is set 0 and the specific PRS resource is S1, then it indicates that the associated target prediction model is applied to a signal(s) on S1 in resource set 0 in each of PFL 0, PFL 1, and PFL 2 for TRP *a,* but is not applied to other PRS signals.

It should be understood that, the beneficial effects of 3.1, 3.2, and 3.3 are the same as those of Embodiment 1, which are not described again herein to avoid redundancy.

As can be seen, similar to Embodiment 1, a possible RRC structure of *trpInfo* is as follows, and a field denoted as "OPTIONAL" in the data structure is an optional field.

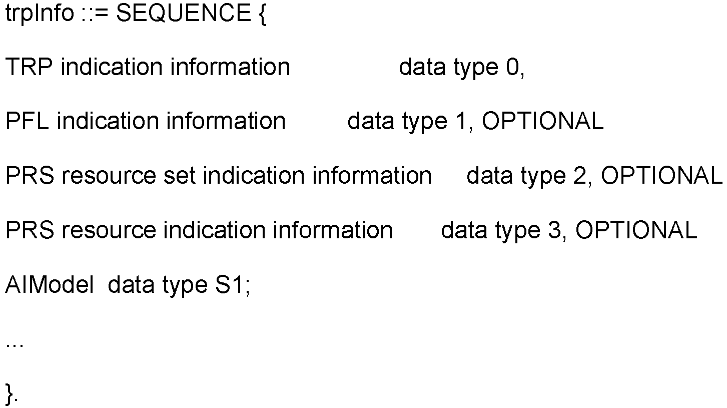

Preferable embodiments of the disclosure have been described in detail above with reference to the accompanying drawings. However, the disclosure is not limited to the specific details in implementations described above. Within the scope of the technical concept of the disclosure, many simple modifications can be made to the technical solutions of the disclosure, and these simple modifications all belong to the protection scope of the disclosure. For example, various specific technical features described in the foregoing implementations can be combined in any suitable manner without contradiction, and in order to avoid unnecessary redundancy, various possible combination manners will not be further described in the disclosure. For another example, various implementations of the disclosure can also be arbitrarily combined, and shall also be regarded as contents disclosed in the disclosure as long as they do not depart from the idea of the disclosure.

It should also be understood that, in various method embodiments of the disclosure, the magnitude of a sequence number of each of the foregoing processes does not imply an execution order, and the execution order between the processes should be determined according to function and internal logic thereof, which shall not constitute any limitation to the implementation of embodiments of the disclosure.

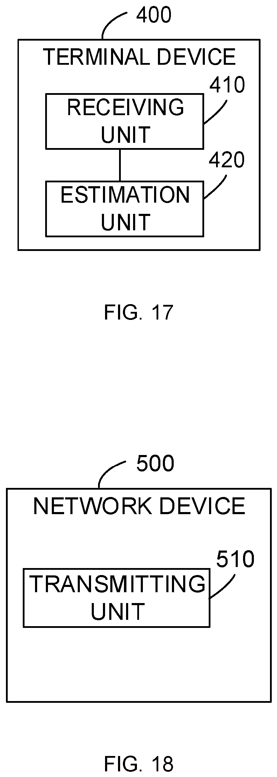

The method embodiments of the disclosure are described in detail above with reference to FIG. 9 to FIG. 16, and the apparatus embodiments of the disclosure are described in detail below with reference to FIG. 17 to FIG. 20.

FIG. 17 is a schematic block diagram of a terminal device 400 according to embodiments of the disclosure.

As illustrated in FIG. 17, the terminal device 400 can include a receiving unit 410 and an estimation unit 420. The receiving unit 410 is configured to receive first information sent by a network device, where the first information is used for determining a target prediction model. The estimation unit 420 is configured to estimate, based on the target prediction model, a location of the terminal device or information for determining the location of the terminal device, to obtain an estimation result.

In some embodiments, the first information includes indication information of the target prediction model.

In some embodiments, the indication information of the target prediction model includes at least one of: a model index of the target prediction model, a model format of the target prediction model, or a model configuration of the target prediction model.

In some embodiments, reference-signal configuration information received by the terminal device includes one or more first configuration information, and the first information is used for determining a target prediction model associated with at least one first configuration information in the one or more first configuration information.

In some embodiments, the first information is used for determining a target prediction model associated with at least one first TRP.

In some embodiments, the first information includes indication information of the at least one first TRP.

In some embodiments, reference-signal configuration information corresponding to the first TRP includes one or more first configuration information, and the first information is used for determining a target prediction model associated with at least one first configuration information in the one or more first configuration information.

In some embodiments, the first information includes indication information of the at least one first configuration information.

In some embodiments, the one or more first configuration information includes at least one of: one or more PFLs, one or more reference-signal resource sets, or one or more reference-signal resources.

In some embodiments, the the number of the at least one first configuration information is greater than or equal to the number of input signals of the target prediction model during training of the target prediction model; or when the first information is used for determining a target prediction model associated with at least one first TRP, the number of the at least one first TRP is greater than or equal to the number of input signals of the target prediction model during training of the target prediction model.

In some embodiments, the receiving unit 410 is further configured to receive second information sent by the network device, where the second information is used for determining a target model set, and the first information indicates the target prediction model from the target model set.

In some embodiments, the second information includes indication information of the target model set.

In some embodiments, the indication information of the target model set includes at least one of: a set index of the target model set, a set format of the target model set, or a model configuration of the target model set.

In some embodiments, reference-signal configuration information received by the terminal device includes one or more second configuration information, and the second information is used for determining a target model set associated with at least one second configuration information in the one or more second configuration information.

In some embodiments, the second information is used for determining a target model set associated with at least one second TRP.

In some embodiments, the second information includes indication information of the at least one second TRP.

In some embodiments, the target prediction model is a prediction model associated with the at least one second TRP.

In some embodiments, the target prediction model is a prediction model associated with some second TRPs in the at least one second TRP.

In some embodiments, reference-signal configuration information corresponding to the second TRP includes one or more second configuration information, and the first information is used for determining a target prediction model associated with at least one second configuration information in the one or more second configuration information.

In some embodiments, the first information includes indication information of the at least one second configuration information.

In some embodiments, the one or more second configuration information includes at least one of: one or more PFLs, one or more reference-signal resource sets, or one or more reference-signal resources.

In some embodiments, the number of the at least one second configuration information is greater than or equal to the number of input signals of the target prediction model during training of the target prediction model; or when the second information is used for determining a target model set associated with at least one second TRP, the number of second TRPs associated with the target prediction model is greater than or equal to the number of input signals of the target prediction model during training of the target prediction model.

In some embodiments, a protocol applied to the second information is an LPP, or the second information is configured via RRC signaling.

In some embodiments, the reference-signal configuration information is configuration information of any one of: an SSB, a CSI-RS, or a PRS.

In some embodiments, the reference-signal configuration information is configuration information of a PRS.

In some embodiments, a protocol applied to the first information is an LPP, or the first information is configured via RRC signaling.

In some embodiments, the estimation unit 420 is further configured to perform at least one of: selecting the target prediction model, activating the target prediction model, deactivating the target prediction model, switching a model in use to the target prediction model, or rolling the model in use back to the target prediction model.

In some embodiments, the estimation unit 420 is specifically configured to estimate the location of the terminal device based on the target prediction model, to obtain a location estimation result of the terminal device.

In some embodiments, the estimation unit 420 is specifically configured to: estimate, based on the target prediction model, the information for determining the location of the terminal device, to obtain an intermediate estimation result for determining the location of the terminal device; and send the intermediate estimation result to the network device.

In some embodiments, the intermediate estimation result includes at least one of: a TOA, an RSTD, a DL-TDOA, an RSRP, or indication information that a channel model of the terminal device is LOS or NLOS.

It should be understood that, the apparatus embodiments and the method embodiments can correspond to each other, and for similar illustration, reference can be made to the method embodiments. Specifically, the terminal device 400 illustrated in FIG. 17 can correspond to a corresponding entity for performing the method involved in embodiments of the disclosure, and the foregoing and other operations and/or functions of each unit in the terminal device 400 are intended to implement corresponding processes of the method involved in embodiments of the disclosure, which are not described again herein for brevity.

FIG. 18 is a schematic block diagram of a network device 500 according to embodiments of the disclosure.

As illustrated in FIG. 18, the network device 500 can include a transmitting unit 510. The transmitting unit 510 is configured to send first information to a terminal device, where the first information is used for the terminal device to determine a target prediction model, and the target prediction model is used for the terminal device to estimate a location of the terminal device or information used for determining the location of the terminal device.

In some embodiments, the first information includes indication information of the target prediction model.

In some embodiments, the indication information of the target prediction model includes at least one of: a model index of the target prediction model, a model format of the target prediction model, or a model configuration of the target prediction model.

In some embodiments, reference-signal configuration information received by the terminal device includes one or more first configuration information, and the first information is used for determining a target prediction model associated with at least one first configuration information in the one or more first configuration information.

In some embodiments, the first information is used for determining a target prediction model associated with at least one first TRP.

In some embodiments, the first information includes indication information of the at least one first TRP.

In some embodiments, reference-signal configuration information corresponding to the first TRP includes one or more first configuration information, and the first information is used for determining a target prediction model associated with at least one first configuration information in the one or more first configuration information.

In some embodiments, the first information includes indication information of the at least one first configuration information.

In some embodiments, the one or more first configuration information includes at least one of: one or more PFLs, one or more reference-signal resource sets, or one or more reference-signal resources.

In some embodiments, the number of the at least one first configuration information is greater than or equal to the number of input signals of the target prediction model during training of the target prediction model; or when the first information is used for determining a target prediction model associated with at least one first TRP, the number of the at least one first TRP is greater than or equal to the number of input signals of the target prediction model during training of the target prediction model.

In some embodiments, the transmitting unit 510 is further configured to send second information to the terminal device, where the second information is used for determining a target model set, and the first information indicates the target prediction model from the target model set.

In some embodiments, the second information includes indication information of the target model set.

In some embodiments, the indication information of the target model set includes at least one of: a set index of the target model set, a set format of the target model set, or a model configuration of the target model set.

In some embodiments, reference-signal configuration information received by the terminal device includes one or more second configuration information, and the second information is used for determining a target model set associated with at least one second configuration information in the one or more second configuration information.

In some embodiments, the second information is used for determining a target model set associated with at least one second TRP.

In some embodiments, the second information includes indication information of the at least one second TRP.

In some embodiments, the target prediction model is a prediction model associated with the at least one second TRP.

In some embodiments, the target prediction model is a prediction model associated with some second TRPs in the at least one second TRP.

In some embodiments, reference-signal configuration information corresponding to the second TRP includes one or more second configuration information, and the first information is used for determining a target prediction model associated with at least one second configuration information in the one or more second configuration information.

In some embodiments, the first information includes indication information of the at least one second configuration information.

In some embodiments, the one or more second configuration information includes at least one of: one or more PFLs, one or more reference-signal resource sets, or one or more reference-signal resources.

In some embodiments, the number of the at least one second configuration information is greater than or equal to the number of input signals of the target prediction model during training of the target prediction model; or when the second information is used for determining a target model set associated with at least one second TRP, the number of second TRPs associated with the target prediction model is greater than or equal to the number of input signals of the target prediction model during training of the target prediction model.

In some embodiments, a protocol applied to the second information is an LPP, or the second information is configured via RRC signaling.

In some embodiments, the reference-signal configuration information is configuration information of any one of: an SSB, a CSI-RS, or a PRS.

In some embodiments, the reference-signal configuration information is configuration information of a PRS.

In some embodiments, a protocol applied to the first information is an LPP, or the first information is configured via RRC signaling.

In some embodiments, the transmitting unit 510 is further configured to receive an intermediate estimation result sent by the terminal device; and estimate the location of the terminal device based on the intermediate estimation result, to obtain a location estimation result.

In some embodiments, the intermediate estimation result includes at least one of: a TOA, an RSTD, a DL-TDOA, an RSRP, or indication information that a channel model of the terminal device is LOS or NLOS.

It should be understood that, the apparatus embodiments and the method embodiments can correspond to each other, and for similar illustration, reference can be made to the method embodiments. Specifically, the network device 500 illustrated in FIG. 18 can correspond to a corresponding entity for performing the method involved in embodiments of the disclosure. The foregoing and other operations and/or functions of each unit in the network device 500 are intended to implement corresponding processes in the methods involved in embodiments of the disclosure, which are not described again herein for brevity.

The communication device in embodiments of the disclosure has been described above from the perspective of functional modules with reference to the accompanying drawings. It should be understood that, the functional module can be implemented by the form of hardware, or can be implemented by an instruction in the form of software, or can be implemented by a combination of hardware and software module. Specifically, each step of the method embodiments of the disclosure can be completed by an integrated logic circuit of hardware in a processor and/or an instruction in the form of software. The steps of the method disclosed in embodiments of the disclosure can be directly implemented by a hardware decoding processor, or can be performed by hardware and software modules in the decoding processor. Optionally, the software module can be located in a storage medium such as a random access memory (RAM), a flash memory, a read only memory (ROM), a programmable ROM (PROM), or an electrically erasable programmable memory, registers, and the like. The storage medium is located in a memory. The processor reads the information in the memory, and completes the steps of the foregoing method embodiments with the hardware of the processor.

For example, the receiving unit 410 or the transmitting unit 510 referred to above can be implemented by a transceiver, and the estimating unit 420 referred to above can be implemented by a processor.

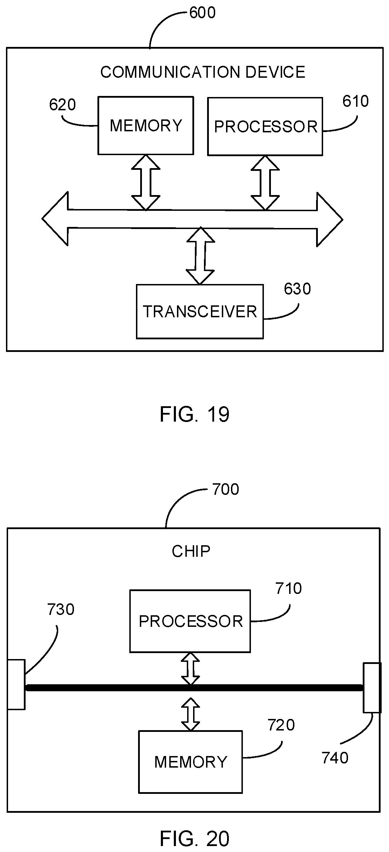

FIG. 19 is a schematic structural diagram of a communication device 600 according to embodiments of the disclosure.

As illustrated in FIG. 19, the communication device 600 can include a processor 610.

The processor 610 can invoke and execute computer programs stored in a memory, to perform the method in embodiments of the disclosure.

As illustrated in FIG. 19, the communication device 600 can further include a memory 620.

The memory 620 can be configured to store information, or store codes, instructions, etc. executable by the processor 610. The processor 610 can invoke and execute computer programs stored in the memory 620, to perform the method in embodiments of the disclosure. The memory 620 may be a separate device independent of the processor 610, or may be integrated into the processor 610.

As illustrated in FIG. 19, the communication device 600 can further include a transceiver 630.

The processor 610 can control the transceiver 630 to communicate with other devices, specifically, to transmit information or data to other devices or to receive information or data transmitted by other devices. The transceiver 630 can include a transmitter and a receiver. The transceiver 630 can further include an antenna, where one or more antennas can be provided.

It should be understood that, various components in the communication device 600 are connected together via a bus system. In addition to a data bus, the bus system may further include a power bus, a control bus, and a status signal bus.

It should also be understood that, the communication device 600 can be operable as the terminal device in embodiments of the disclosure, and the communication device 600 can implement the operations performed by the terminal device in various methods in embodiments of the disclosure. In other words, the communication device 600 in embodiments of the disclosure can correspond to the terminal device 4000 in embodiments of the disclosure, and can correspond to a corresponding entity for implementing various methods according to embodiments of the disclosure, which will not be repeated herein for the sake of simplicity. Similarly, the communication device 600 can be operable as the network device in embodiments of the disclosure, and the communication device 600 can implement the operations performed by the network device in various methods in embodiments of the disclosure. In other words, the communication device 600 in embodiments of the disclosure can correspond to the network device 500 in embodiments of the disclosure, and can correspond to a corresponding entity for implementing various methods according to embodiments of the disclosure, which will not be repeated herein for the sake of simplicity.

In addition, embodiments of the disclosure further provide a chip.

For example, the chip may be an integrated circuit chip with signal processing capabilities, which can implement or execute various methods, steps, or logic blocks disclosed in embodiments of the disclosure. The chip can also be referred to as a system-on-chip (SOC). Optionally, the chip is applicable to various communication devices, to cause a communication device equipped with the chip to perform various methods, steps, or logic blocks disclosed in embodiments of the disclosure.

FIG. 20 is a schematic structural diagram of a chip 700 according to embodiments of the disclosure.

As illustrated in FIG. 20, the chip 700 includes a processor 710.

The processor 710 can invoke and execute computer programs stored in a memory to perform the method in embodiments of the disclosure.

As illustrated in FIG. 20, the chip 700 can further include a memory 720.

The processor 710 can invoke and execute the computer programs stored in the memory 720 to perform the method in embodiments of the disclosure. The memory 720 can be configured to store indication information, or store codes, instructions, etc. executable by the processor 710. The memory 720 can be a separate device independent of the processor 710, or may be integrated into the processor 710.

As illustrated in FIG. 20, the chip 700 can further include an input interface 730.

The processor 710 can control the input interface 730 to communicate with other devices or chips, and specifically, can obtain information or data sent by other devices or chips.

As illustrated in FIG. 20, the chip 700 can further include an output interface 740.

The processor 710 can control the output interface 740 to communicate with other devices or chips, and specifically, can output information or data to other devices or chips.

It should be understood that, the chip 700 is applicable to the network device in embodiments of the disclosure. The chip can implement the operations performed by the network device in various methods in embodiments of the disclosure, and can also implement the operations performed by the terminal device in various methods in embodiments in the disclosure, which will not be repeated herein for the sake of simplicity.

It should be also understood that, various components in the chip 700 are connected together via a bus system. In addition to a data bus, the bus system can further include a power bus, a control bus, and a status signal bus.

The processor described above can include but is not limited to a generalpurpose processor, a digital signal processor (DSP), an application specific integrated circuit (ASIC), a field programmable gate array (FPGA), or other programmable logic devices, discrete gates or transistor logic devices, discrete hardware components, etc.

The processor can be configured to perform or execute the methods, steps, and logic blocks disclosed in embodiments of the disclosure can be implemented or executed. The steps of the method disclosed in embodiments of the disclosure can be directly implemented by a hardware decoding processor, or can be performed by hardware and software modules in the decoding processor. The software module can be located in a storage medium such as a RAM, a flash memory, a ROM, a PROM, or an erasable programmable memory, registers, and the like. The storage medium is located in the memory. The processor reads the information in the memory, and completes the steps of the method described above with the hardware of the processor.

The memory described above can include but is not limited to a volatile memory and/or a non-volatile memory. The non-volatile memory may be a ROM, a PROM, an erasable PROM (EPROM), an electrically EPROM (EEPROM), or flash memory. The volatile memory can be a RAM that acts as an external cache. By way of example but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a direct rambus RAM (DR RAM).

It should be noted that, the memory described in the disclosure is intended to include, but is not limited to, these and any other suitable types of memory.

Embodiments of the disclosure further provide a computer-readable storage medium. The computer-readable storage medium is configured to store computer programs. The computer-readable storage medium stores one or more programs. The one or more programs include instructions which, when executed by a portable electronic device including multiple application programs, are operable with the portable electronic device to perform the wireless communication method provided in the disclosure. Optionally, the computer-readable storage medium is applicable to the network device of embodiments of the disclosure. The computer programs are operable with a computer to implement the operations performed by the network device in various methods in embodiments of the disclosure, which will not be repeated herein for the sake of simplicity. Optionally, the computer-readable storage medium is applicable to the mobile terminal / the terminal device of embodiments of the disclosure. The computer programs are operable with a computer to implement the operations performed by the mobile terminal / the terminal device in various methods in embodiments of the disclosure, which will not be repeated herein for the sake of simplicity.

Embodiments of the disclosure further provide a computer program product. The computer program product includes computer programs. Optionally, the computer program product is applicable to the network device of embodiments of the disclosure. The computer programs are operable with a computer to implement the operations performed by the network device in various methods in embodiments of the disclosure, which will not be repeated herein for the sake of simplicity. Optionally, the computer program product is applicable to the mobile terminal / the terminal device of embodiments of the disclosure. The computer programs are operable with a computer to implement the operations performed by the mobile terminal / the terminal device in various methods in embodiments of the disclosure, which will not be repeated herein for the sake of simplicity.

Embodiments of the disclosure further provide a computer program. The computer program, when executed by a computer, is operable with the computer to perform the wireless communication method provided in the disclosure. Optionally, the computer program is applicable to the network device of embodiments of the disclosure. The computer program, when executed by a computer, is operable with the computer to implement the operations performed by the network device in various methods in embodiments of the disclosure, which will not be repeated herein for the sake of simplicity. Optionally, the computer program is applicable to the mobile terminal/terminal device of embodiments of the disclosure. The computer program, when executed by a computer, is operable with the computer to implement the operations performed by the mobile terminal/terminal device in various methods in embodiments of the disclosure, which will not be repeated herein for the sake of simplicity.

The disclosure further provides a communication system. The communication system can include the terminal device and the network device described above, to constitute the communication system illustrated in FIG. 1 or FIG. 2, which will not be repeated herein for the sake of simplicity. It is to be noted that, the term "system" or the like in the disclosure can also be referred to as "network management architecture" or "network architecture", etc.

It should be also understood that, the terms used in embodiments of the disclosure and the appended claims are merely intended for describing the embodiments, rather than limiting embodiments of the disclosure. For example, the singular form "a/an", "said", "above", and "the" used in embodiments of the disclosure and the appended claims are also intended to include multiple forms, unless specified otherwise in the context.

Those of ordinary skill in the art will appreciate that units and algorithmic operations of various examples described in connection with embodiments of the disclosure can be implemented by electronic hardware or by a combination of computer software and electronic hardware. Whether these functions are performed by means of hardware or software depends on the application and the design constraints of the associated technical solution. Those skilled in the art can use different methods with regard to each particular application to implement the described functionality, but such methods should not be regarded as lying beyond the scope of the disclosure. If the functions are implemented as software functional units and sold or used as standalone products, they can be stored in a computer-readable storage medium. Based on such an understanding, the essential technical solution, or the portion that contributes to the related art, or part of the technical solution of the disclosure can be embodied as software products. The computer software products can be stored in a storage medium and can include multiple instructions that, when executed, can cause a computer device, e.g., a personal computer, a server, a network device, etc., to execute some or all operations of the methods described in various embodiments of the disclosure. The above storage medium can include various kinds of media that can store program codes, such as a universal serial bus (USB) flash disk, a mobile hard drive, a ROM, a RAM, a magnetic disk, or an optical disk.

It will be evident to those skilled in the art that, for the sake of convenience and simplicity, in terms of the specific working processes of the foregoing systems, apparatuses, and units, reference can be made to the corresponding processes in the foregoing method embodiments, which will not be repeated herein. It will be appreciated that the systems, apparatuses, and methods disclosed in embodiments of the disclosure can also be implemented in various other manners. For example, the division of units, modules, or assemblies in the foregoing apparatus embodiments is only a division of logical functions, and there can be other manners of division available in practice, e.g., multiple units, modules, or assemblies can be combined or can be integrated into another system, or some features can be ignored or skipped. Separated units/modules/assemblies as illustrated may or may not be physically separated, that is, may reside at one location or may be distributed to multiple networked units. Some or all of the units/modules/assemblies can be selectively adopted according to practical needs to achieve desired objectives of the disclosure. It is to be noted that, the coupling or direct coupling or communication connection as illustrated or discussed can be an indirect coupling or communication connection through some interface, device, or unit, and can be electrical, mechanical, or otherwise.

The foregoing elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A location estimation method, comprising:
receiving first information sent by a network device, wherein the first information is used for determining a target prediction model; and
estimating, based on the target prediction model, a location of a terminal device or information for determining the location of the terminal device, to obtain an estimation result.

2. The method of claim 1, wherein the first information comprises indication information of the target prediction model.

3. The method of claim 2, wherein the indication information of the target prediction model comprises at least one of: a model index of the target prediction model, a model format of the target prediction model, or a model configuration of the target prediction model.

4. The method of any of claims 1 to 3, wherein reference-signal configuration information received by the terminal device comprises one or more first configuration information, and the first information is used for determining a target prediction model associated with at least one first configuration information in the one or more first configuration information.

5. The method of any of claims 1 to 3, wherein the first information is used for determining a target prediction model associated with at least one first transmission reception point (TRP).

6. The method of claim 5, wherein the first information comprises indication information of the at least one first TRP.

7. The method of claim 5 or 6, wherein reference-signal configuration information corresponding to the first TRP comprises one or more first configuration information, and the first information is used for determining a target prediction model associated with at least one first configuration information in the one or more first configuration information.

8. The method of claim 4 or 7, wherein the first information comprises indication information of the at least one first configuration information.

9. The method of claim 4 or 7, wherein the one or more first configuration information comprises at least one of: one or more positioning frequency layers (PFLs), one or more reference-signal resource sets, or one or more reference-signal resources.

10. The method of claim 4 or 7, wherein the number of the at least one first configuration information is greater than or equal to the number of input signals of the target prediction model during training of the target prediction model; or when the first information is used for determining a target prediction model associated with at least one first TRP, the number of the at least one first TRP is greater than or equal to the number of input signals of the target prediction model during training of the target prediction model.

11. The method of any of claims 1 to 3, further comprising:
receiving second information sent by the network device, wherein the second information is used for determining a target model set, and the first information indicates the target prediction model from the target model set.

12. The method of claim 11, wherein the second information comprises indication information of the target model set.

13. The method of claim 12, wherein the indication information of the target model set comprises at least one of: a set index of the target model set, a set format of the target model set, or a model configuration of the target model set.

14. The method of any of claims 11 to 13, wherein reference-signal configuration information received by the terminal device comprises one or more second configuration information, and the second information is used for determining a target model set associated with at least one second configuration information in the one or more second configuration information.

15. The method of any of claims 11 to 13, wherein the second information is used for determining a target model set associated with at least one second TRP.

16. The method of claim 15, wherein the second information comprises indication information of the at least one second TRP.

17. The method of claim 15 or 16, wherein the target prediction model is a prediction model associated with the at least one second TRP.

18. The method of claim 15 or 16, wherein the target prediction model is a prediction model associated with some second TRPs in the at least one second TRP.

19. The method of any of claims 15 to 18, wherein reference-signal configuration information corresponding to the second TRP comprises one or more second configuration information, and the first information is used for determining a target prediction model associated with at least one second configuration information in the one or more second configuration information.

20. The method of claim 19, wherein the first information comprises indication information of the at least one second configuration information.

21. The method of claim 14 or 19, wherein the one or more second configuration information comprises at least one of: one or more PFLs, one or more reference-signal resource sets, or one or more reference-signal resources.

22. The method of claim 14 or 19, wherein the number of the at least one second configuration information is greater than or equal to the number of input signals of the target prediction model during training of the target prediction model; or when the second information is used for determining a target model set associated with at least one second TRP, the number of second TRPs associated with the target prediction model is greater than or equal to the number of input signals of the target prediction model during training of the target prediction model.

23. The method of claim 14 or 19, wherein a protocol applied to the second information is a long-term evolution (LTE) positioning protocol (LPP), or the second information is configured via radio resource control (RRC) signaling.

24. The method of claim 4 or 14, wherein the reference-signal configuration information is configuration information of any one of: a synchronization signal / physical broadcast channel (PBCH) block (SSB), a channel state information-reference signal (CSI-RS), or a positioning reference signal (PRS).

25. The method of claim 7 or 19, wherein the reference-signal configuration information is configuration information of a PRS.

26. The method of any of claims 1 to 25, wherein a protocol applied to the first information is an LPP, or the first information is configured via RRC signaling.

27. The method of any of claims 1 to 26, further comprising:
performing at least one of:
selecting the target prediction model;
activating the target prediction model;
deactivating the target prediction model;
switching a model in use to the target prediction model; or
rolling the model in use back to the target prediction model.

28. The method of any of claims 1 to 27, wherein estimating, based on the target prediction model, the location of the terminal device or the information for determining the location of the terminal device to obtain the estimation result comprises:
estimating the location of the terminal device based on the target prediction model, to obtain a location estimation result of the terminal device.

29. The method of any of claims 1 to 27, wherein estimating, based on the target prediction model, the location of the terminal device or the information for determining the location of the terminal device to obtain the estimation result comprises:
estimating, based on the target prediction model, the information for determining the location of the terminal device, to obtain an intermediate estimation result for determining the location of the terminal device; and
sending the intermediate estimation result to the network device.

30. The method of claim 29, wherein the intermediate estimation result comprises at least one of: a time of arrival (TOA), a reference signal time difference (RSTD), a downlink time difference of arrival (DL-TDOA), a reference signal received power (RSRP), or indication information that a channel model of the terminal device is line-of-sight (LOS) or non-LOS (NLOS).

31. An information transmission method, comprising:
sending first information to a terminal device, wherein the first information is used for the terminal device to determine a target prediction model, and the target prediction model is used for the terminal device to estimate a location of the terminal device or information for determining the location of the terminal device.

32. The method of claim 31, wherein the first information comprises indication information of the target prediction model.

33. The method of claim 32, wherein the indication information of the target prediction model comprises at least one of: a model index of the target prediction model, a model format of the target prediction model, or a model configuration of the target prediction model.

34. The method of any of claims 31 to 33, wherein reference-signal configuration information received by the terminal device comprises one or more first configuration information, and the first information is used for determining a target prediction model associated with at least one first configuration information in the one or more first configuration information.

35. The method of any of claims 31 to 33, wherein the first information is used for determining a target prediction model associated with at least one first transmission reception point (TRP).

36. The method of claim 35, wherein the first information comprises indication information of the at least one first TRP.

37. The method of claim 35 or 36, wherein reference-signal configuration information corresponding to the first TRP comprises one or more first configuration information, and the first information is used for determining a target prediction model associated with at least one first configuration information in the one or more first configuration information.

38. The method of claim 34 or 37, wherein the first information comprises indication information of the at least one first configuration information.

39. The method of claim 34 or 37, wherein the one or more first configuration information comprises at least one of: one or more positioning frequency layers (PFLs), one or more reference-signal resource sets, or one or more reference-signal resources.

40. The method of claim 34 or 37, wherein the number of the at least one first configuration information is greater than or equal to the number of input signals of the target prediction model during training of the target prediction model; or when the first information is used for determining a target prediction model associated with at least one first TRP, the number of the at least one first TRP is greater than or equal to the number of input signals of the target prediction model during training of the target prediction model.

41. The method of any of claims 31 to 33, further comprising:
sending second information to the terminal device, wherein the second information is used for determining a target model set, and the first information indicates the target prediction model from the target model set.

42. The method of claim 41, wherein the second information comprises indication information of the target model set.

43. The method of claim 42, wherein the indication information of the target model set comprises at least one of: a set index of the target model set, a set format of the target model set, or a model configuration of the target model set.

44. The method of any of claims 41 to 43, wherein reference-signal configuration information received by the terminal device comprises one or more second configuration information, and the second information is used for determining a target model set associated with at least one second configuration information in the one or more second configuration information.

45. The method of any of claims 41 to 43, wherein the second information is used for determining a target model set associated with at least one second TRP.

46. The method of claim 45, wherein the second information comprises indication information of the at least one second TRP.

47. The method of claim 45 or 46, wherein the target prediction model is a prediction model associated with the at least one second TRP.

48. The method of claim 45 or 46, wherein the target prediction model is a prediction model associated with some second TRPs in the at least one second TRP.

49. The method of any of claims 45 to 48, wherein reference-signal configuration information corresponding to the second TRP comprises one or more second configuration information, and the first information is used for determining a target prediction model associated with at least one second configuration information in the one or more second configuration information.

50. The method of claim 49, wherein the first information comprises indication information of the at least one second configuration information.

51. The method of claim 44 or 49, wherein the one or more second configuration information comprises at least one of: one or more PFLs, one or more reference-signal resource sets, or one or more reference-signal resources.

52. The method of claim 44 or 49, wherein the number of the at least one second configuration information is greater than or equal to the number of input signals of the target prediction model during training of the target prediction model; or when the second information is used for determining a target model set associated with at least one second TRP, the number of second TRPs associated with the target prediction model is greater than or equal to the number of input signals of the target prediction model during training of the target prediction model.

53. The method of claim 44 or 49, wherein a protocol applied to the second information is a long-term evolution (LTE) positioning protocol (LPP), or the second information is configured via radio resource control (RRC) signaling.

54. The method of claim 34 or 44, wherein the reference-signal configuration information is configuration information of any one of: a synchronization signal / physical broadcast channel (PBCH) block (SSB), a channel state information-reference signal (CSI-RS), or a positioning reference signal (PRS).

55. The method of claim 37 or 49, wherein the reference-signal configuration information is configuration information of a PRS.

56. The method of any of claims 31 to 55, wherein a protocol applied to the first information is an LPP, or the first information is configured via RRC signaling.

57. The method of any one of claims 31 to 56, further comprising:
receiving an intermediate estimation result sent by the terminal device; and
determining a location estimation result of the terminal device based on the intermediate estimation result.

58. The method of claim 57, wherein the intermediate estimation result comprises at least one of: a time of arrival (TOA), a reference signal time difference (RSTD), a downlink time difference of arrival (DL-TDOA), a reference signal received power (RSRP), or indication information that a channel model of the terminal device is line-of-sight (LOS) or non-LOS (NLOS).

59. A terminal device, comprising:
a receiving unit configured to receive first information sent by a network device, wherein the first information is used for determining a target prediction model; and
an estimation unit configured to estimate, based on the target prediction model, a location of the terminal device or information for determining the location of the terminal device, to obtain an estimation result.

60. A network device, comprising:
a transmitting unit configured to send first information to a terminal device, wherein the first information is used for the terminal device to determine a target prediction model, and the target prediction model is used for the terminal device to estimate a location of the terminal device or information for determining the location of the terminal device.

61. A terminal device, comprising a transceiver, a processor, and a memory, where the memory is configured to store computer programs, and the processor is configured to invoke and execute the computer programs stored in the memory, to cause the transceiver and/or the processor to perform the method of any of claims 1 to 30.

62. A network device, comprising a transceiver, a processor, and a memory, where the memory is configured to store computer programs, and the processor is configured to invoke and execute the computer programs stored in the memory, to cause the transceiver and/or the processor to perform the method of any of claims 31 to 58.

63. A chip, comprising:
a processor configured to invoke and execute computer programs from a memory, to cause a device equipped with the chip to perform the method of any of claims 1 to 30 or the method of any of claims 31 to 58.

64. A computer-readable storage medium, configured to store computer programs which are operable with a computer to perform the method of any of claims 1 to 30 or the method of any of claims 31 to 58.

65. A computer program product, comprising computer program instructions which are operable with a computer to perform the method of any of claims 1 to 30 or the method of any of claims 31 to 58.

66. A computer program, operable with a computer to perform the method of any of claims 1 to 30 or the method of any of claims 31 to 58.
